# EUROPEAN PATENT APPLICATION

(11) **EP 2 065 420 A1**
(43) Date of publication of application: **03.06.2009**
(21) Application number: 07806901.0
(22) Date of filing: 31.08.2007
(51) Int. Cl.: C08G 61/10, C08G 61/12

(54) **METHOD FOR PRODUCING POLYARYLENE**

(30) Priority: 20.09.2006 JP 2006253957; 22.12.2006 JP 2006345451
(71) Applicant: Sumitomo Chemical Company, Limited, Tokyo 104-8260 (JP)
(72) Inventor: ODA, Seiji, Ibaraki-shi, Osaka 567-0841 (JP); KAMIKAWA, Takashi, Nara-shi, Nara 630-8442 (JP)
(74) Representative: Vossius & Partner
(86) International application number: PCT/JP2007/067460
(87) International publication number: WO 2008/035575

(57) **Abstract**

A method for producing a polyarylene comprising polymerizing only a dihalobiphenyl compound represented by the formula (1): 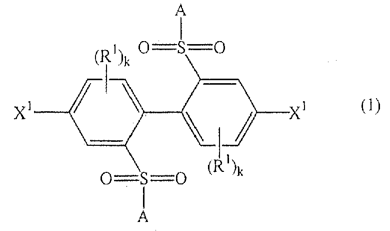 wherein A represents a C1-C20 alkoxy group etc., R¹ represents a fluorine atom etc., X¹ represents a chlorine atom etc., and k represents an integer of 0 to 3, or a dihalobiphenyl compound represented by the formula (1) with an aromatic compound represented by the formula (2): 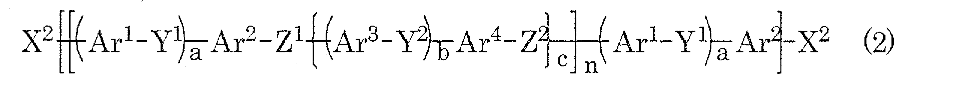 or an aromatic compound represented by the formula (3):

X³-Ar⁵-X³ (3)

wherein a, b and c represents 0 or 1, n represents an integer of 5 or more, Ar¹, Ar², Ar³ and Ar⁴ represents a divalent aromatic group etc., Y¹ and Y² represents a single bond etc., Z¹ and Z² represents -O- or -S-, and X² and X³ represent a chlorine atom etc.,
in the presence of catalytic amounts of a divalent nickel compound, a trivalent phosphorus ligand and zinc.

## Description

### Technical Field

The present invention relates to a method for producing a polyarylene.

### Background Art

A polyarylene having sulfonic acid groups is useful as a polyelectrolyte for proton-exchange membrane fuel cell and the like. Methods using a diphenyl dihalobiphenyldisulfonate as a monomer (e.g. Macromol. Rapid Commun., 15, 669-676 (1994) and Polymeric Materials; Science & Engineering, 2003, 89, 438-439) have been known as methods for producing it.

### Disclosure of the Invention

The present invention provides:
<1> A method for producing a polyarylene comprising polymerizing only a dihalobiphenyl compound represented by the formula (1): 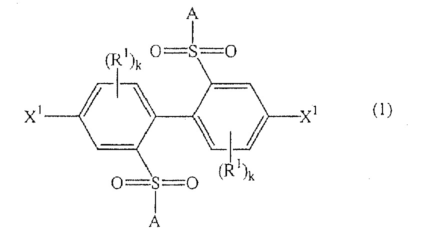 wherein A represents an amino group substituted with one or two C1-C20 hydrocarbon groups or a C1-C20 alkoxy group, and the above-mentioned hydrocarbon group and the alkoxy group may be substituted with at least one group selected from the group consisting of a fluorine atom, a C1-C20 alkoxy group, a C6-C20 aryl group, a C6-C20 aryloxy group, a C2-C20 acyl group and a cyano group,
   R¹ represents a fluorine atom, a C1-C20 alkyl group, a
   C1-C20 alkoxy group, a C6-C20 aryl group, a C6-C20 aryloxy group, a C2-C20 acyl group or a cyano group, and the C1-C20 alkyl group, the C1-C20 alkoxy group, the C6-C20 aryl group, the C6-C20 aryloxy group and the C2-C20 acyl group may be substituted with at least one substituent selected from the group consisting of a fluorine atom, a cyano group, a C1-C20 alkoxy group, a C6-C20 aryl group and a C6-C20 aryloxy group, and when multiple R¹s exist, R¹s may be the same groups or different groups, and the neighboring two R¹s may be bonded to form a ring,
   X¹ represents a chlorine atom, a bromine atom or an iodine atom, and k represents an integer of 0 to 3, or a dihalobiphenyl compound represented by the formula (1) with an aromatic compound represented by the formula (2): 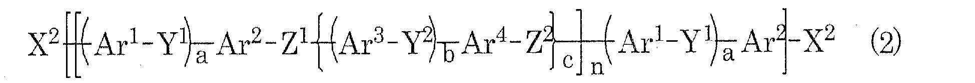 wherein a, b and c are the same or different, and each represents 0 or 1, and n represents an integer of 5 or more, Ar¹, Ar², Ar³ and Ar⁴ are the same or different, and each represents a divalent aromatic group, and the divalent aromatic group may be substituted with at least one substituent selected from the group consisting of
   a C1-C20 alkyl group which may be substituted with at least one substituent selected from the group consisting of a fluorine atom, a cyano group, a C¹-C20 alkoxy group, a C6-C20 aryl group and a C6-C20 aryloxy group;
   a C1-C20 alkoxy group which may be substituted with at least one substituent selected from the group consisting of a fluorine atom, a cyano group, a C1-C20 alkoxy group, a C6-C20 aryl group and a C6-C20 aryloxy group;
   a C6-C20 aryl group which may be substituted with at least one substituent selected from the group consisting of a fluorine atom, a cyano group, a C1-C20 alkoxy group and a C6-C10 aryloxy group;
   a C6-C20 aryloxy group which may be substituted with at least one substituent selected from the group consisting of a fluorine atom, a cyano group, a C1-C20 alkoxy group and a C6- C20 aryloxy group; and
   a C2-C20 acyl group which may be substituted with at least one substituent selected from the group consisting of a fluorine atom, a cyano group, a C1-C20 alkoxy group, a C6-C20 aryl group and a C6-C20 aryloxy group,
   Y¹ and Y² are the same or different, and each represents a single bond, -CO-, -SO₂-, -C(CH₃)₂-, -C(CF₃)₂- or a fluorene-9,9-diyl group,
   Z¹ and Z² are the same or different, and each represents -O- or -S-, and X² represents a chlorine atom, a bromine atom or an iodine atom, or an aromatic compound represented by the formula (3):

      X³-Ar⁵-X³ (3)

      wherein Ar⁵ represents a divalent aromatic group, and the divalent aromatic group may be substituted with at least one substituent selected from the group consisting of
   a C1-C20 alkyl group which may be substituted with at least one substituent selected from the group consisting of a fluorine atom, a cyano group, a C1-C20 alkoxy group, a C6-C20 aryl group and a C6-C20 aryloxy group;
   a C1-C20 alkoxy group which may be substituted with at least one substituent selected from the group consisting of a fluorine atom, a cyano group, a C1-C20 alkoxy group, a C6-C20 aryl group and a C6-C20 aryloxy group;
   a C6-C20 aryl group which may be substituted with at least one substituent selected from the group consisting of a fluorine atom, a cyano group, a C1-C20 alkoxy group and a C6-C20 aryloxy group;
   a C6-C20 aryloxy group which may be substituted with at least one substituent selected from the group consisting of a fluorine atom, a cyano group, a C1-C20 alkoxy group and a C6- C20 aryloxy group; and
   a C2-C20 acyl group which may be substituted with at least one substituent selected from the group consisting of a fluorine atom, a cyano group, a C1-C20 alkoxy group, a C6-C20 aryl group and a C6- C20 aryloxy group, and X³ represents a chlorine atom, a bromine atom or an iodine atom, in the presence of catalytic amounts of a divalent nickel compound, a trivalent phosphorus ligand and zinc;
<2> The method according to <1>, wherein the trivalent phosphorus ligand is a bidentate phosphorus ligand represented by the formula (4): 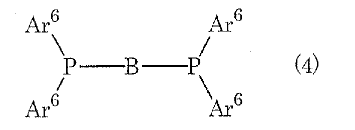 wherein B represents a methylene group, an ethylene group, a trimethylene group, a tetramethylene group, a ferrocene-1,1'-diyl group, a 1,1'-oxybis(2,2'-phenylene) group, a xanthene-4,5-diyl group, a phenoxazine-4,6-diyl group, a 1,1'-binaphthyl-2,2'-diyl group, a 1,1'-biphenyl-2,2'-diyl group or a [2.2]-paracyclophane-4,12-diyl group, and Ar⁶ represents a C6-C20 aryl group which may be substituted with at least one group selected from the group consisting of a fluorine atom, a trifluoromethyl group and a C1-C20 alkoxy group;
<3> The method according to <2>, wherein Ar⁶ is a phenyl group, a 4-methoxyphenyl group or a 4-trifluoromethylphenyl group in the formula (4);
<4> The method according to <2>, wherein B is a ferrocene-1,1'-diyl group or a 1,1'-oxybis(2,2'-phenylene) group in the formula (4);
<5> The method according to <1>, wherein the trivalent phosphorus ligand is a triarylphosphine;
<6> The method according to <1>, wherein the trivalent phosphorus ligand is a trialkylphosphine;
<7> The method according to any one of <1> to <6>, wherein the divalent nickel compound is a nickel halide.

### Best Mode for Carrying Out the Present Invention

First, a dihalobiphenyl compound represented by the formula (1): 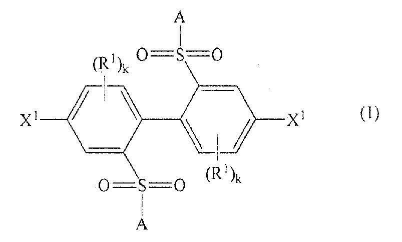 (hereinafter, simply referred to as the dihalobiphenyl compound (1)) will be illustrated.

A represents an amino group substituted with one or two C1-C20 hydrocarbon groups or a C1-C20 alkoxy group.

Examples of the C1-C20 hydrocarbon group include a methyl group, an ethyl group, an n-propyl group, an isopropyl group, an n-butyl group, an isobutyl group, a sec-butyl group, a tert-butyl group, an n-pentyl group, a 2,2-methylpropyl group, an n-hexyl group, a cyclohexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-icosyl group, a phenyl group, a 1,3-butadiene-1,4-diyl group, abutane-1,4-diyl group, a pentane-1,5-diyl group, a biphenyl-2,2'-diyl group and an o-xylylene group.

Examples of the amino group substituted with one or two C1-C20 hydrocarbon groups include a methylamino group, a dimethylamino group, an ethylamino group, a diethylamino group, an n-propylamino group, a di-n-propylamino group, an isopropylamino group, a diisopropylamino group, an n-butylamino group, a di-n-butylamino group, a sec-butylamino group, a di-sec-butylamino group, a tert-butylamino group, a di-tert-butylamino group, an n-pentylamino group, a 2,2-dimethylpropylamino group, an n-hexylamino group, a cyclohexylamino group, an n-heptylamino group, an n-octylamino group, an n-nonylamino group, an n-decylamino group, an n-undecylamino group, an n-dodecylamino group, an n-tridecylamino group, an n-tetradecylamino group, an n-pentadecylamino group, an n-hexadecylamino group, an n-heptadecylamino group, an n-octadecylamino group, an n-nonadecylamino group, an n-icosylamino group, a pyrrolyl group, a pyrrolidinyl group, a piperidinyl group, a carbazolyl group, a dihydroindolyl group and a dihydroisoindolyl group. A diethylamino group and an n-dodecylamino group are preferable.

Examples of the C1-C20 alkoxy group include a linear, branched chain or cyclic C1-C20 alkoxy group such as a methoxy group, an ethoxy group, a n-propoxy group, an isopropoxy group, an n-butoxy group, a sec-butoxy group, a tert-butoxy group, an n-pentyloxy group, a 2,2-dimethylpropoxy group, an n-hexyloxy group, a cyclohexyloxy group, an n-heptyloxy group, an n-octyloxy group, an n-nonyloxy group, an n-decyloxy group, an n-undecyloxy group, an n-dodecyloxy group, an n-tridecyloxy group, an n-tetradecyloxy group, an n-pentadecyloxy group, an n-hexadecyloxy group, an n-heptadecyloxy group, an n-octadecyloxy group, an n-nonadecyloxy group and an n-icosyloxy group. An isopropoxy group, a 2,2-dimethypropoxy group and a cyclohexyloxy group are preferable.

The above-mentioned C1-C20 hydrocarbon group and the above-mentioned C1-C20 alkoxy group may be substituted with at least one group selected from the group consisting of a fluorine atom, a C1-C20 alkoxy group, a C6-C20 aryl group, a C6-C20 aryloxy group, a C2-C20 acyl group and a cyano group.

Examples of the C1-C20 alkoxy group include the same as described above.

Examples of the C6-C20 aryl group include a phenyl group, a 4-methylphenyl group, a 2-methylphenyl group, a 1-naphthyl group, a 2-naphthyl group, a 3-phenanthryl group and a 2-anthryl group. Examples of the C6-C20 aryloxy group include those composed of the above-mentioned C6-C20 aryl group and an oxygen atom such as a phenoxy group, a 4-methylphenoxy group, a 2-methylphenoxy group, a 1-naphthyloxy group, a 2-naphthyloxy group, a 3-phenanthryloxy group and a 2-anthryloxy group.

Examples of the C2-C20 acyl group include a C2-C20 aliphatic or aromatic acyl group such as an acetyl group, a propionyl group, a butyryl group, an isobutyryl group, a benzoyl group, a 1-naphthoyl group and a 2-naphthoyl group.

Among them, a C3-C20 unsubstituted alkoxy group is preferable as A, and an isopropyl group, an isobutoxy group, a 2,2-dimethylpropoxy group and a cyclohexyloxy group are more preferable.

R¹ represents a fluorine atom, a C1-C20 alkyl group, a C1-C20 alkoxy group, a C6-C20 aryl group, a C6-C20 aryloxy group, a C2-C20 acyl group or a cyano group.

Examples of the C1-C20 alkyl group include a linear, branched chain or cyclic C1-C20 alkyl group such as a methyl group, an ethyl group, an n-propyl group, an isopropyl group, an n-butyl group, an isobutyl group, a see-butyl group, a tert-butyl group, an n-pentyl group, a 2,2-methylpropyl group, a cyclopentyl group, an n-hexyl group, a cyclohexyl group, an n-heptyl group, a 2-methylpentyl group, an n-octyl group, a 2-ethylhexyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group and an n-icosyl group.

Examples of the C1-C20 alkoxy group, the C6-C20 aryl group, the C6-C20 aryloxy group and the C2-C20 acyl group include those as same as described above.

The C1-C20 alkyl group, the C1-C20 alkoxy group, the C6-C20 aryl group, the C6-C20 aryloxy group and the C2-C20 acyl group may be substituted with at least one substituent selected from the group consisting of a fluorine atom, a cyano group, a C1-C20 alkoxy group, a C6-C20 aryl group and a C6-C20 aryloxy group, and examples of the C1-C20 alkoxy group, the C6-C20 aryl group and the C6-C20 aryloxy group include those as same as described above.

When multiple R¹s exist, P¹s may be the same groups or different groups. Alternatively, the neighboring two R¹s may be bonded to form a ring.

X¹ represents a chlorine atom, a bromine atom or an iodine atom, and a chlorine atom and a bromine atom are preferable, and k represents an integer of 0 to 3, and k preferably represents 0.

Examples of the dihalobiphenyl compound (1) include dimethyl 4,4'-dichlorobiphenyl-2,2'-disulfonate, diethyl 4,4'-dichlorobiphenyl-2,2'-disulfonate, di(n-propyl) 4,4'-dichlorobiphenyl-2,2'-disulfonate, diisopropyl 4,4'-dichlorobiphenyl-2,2'-disulfonate, di(n-butyl) 4,4'-dichlorobiphenyl-2,2'-disulfonate, diisobutyl 4,4'-dichlorobiphenyl-2,2'-disulfonate, di(2,2-dimethylpropyl) 4,4'-dichlorobiphenyl-2,2'-disulfonate, dicyclohexyl 4,4'-dichlorobiphenyl-2,2'-disulfonate, di(n-octyl) 4,4'-dichlorobiphenyl-2,2'-disulfonate, di(n-pentadecyl) 4,4'-dichlorobiphenyl-2,2'-disulfonate, di(n-icosyl) 4,4'-dichlorobiphenyl-2,2'-disulfonate,
N,N-dimethyl-4,4'-dichlorobiphenyl-2,2'-disulfonam ide, N,N-diethyl-4,4'-dichlorobiphenyl-2,2'-disulfonamide, N,N-di(n-propyl)-4,4'-dichlorobiphenyl-2,2'-disulfonami de, N,N-diisopropyl-4,4'-dichlorobiphenyl-2,2'-disulfonamid e, N,N-di(n-butyl)-4,4'-dichlorobiphenyl-2,2'-disulfonamid e, N,N-diisobutyl-4,4'-dichlorobiphenyl-2,2'-disulfonamide, N,N-di(2,2-dimethylpropyl)-4,4'-dichlorobiphenyl-2,2'-d isulfonamide, N,N-di(n-octyl)-4,4'-dichlorobiphenyl-2,2'-disulfonamid e, N,N-di(n-dodecyl)-4,4'-dichlorobiphenyl-2,2'-disulfonam ide, N,N-di(n-icosyl)-4,4'-dichlorobiphenyl-2,2'-disulfonami de, N,N-diphenyl-4,4'-dichlorobiphenyl-2,2'-disulfonamide, di(2,2-dimethylpropyl) 3,3'-dimethyl-4,4'-dichlorobiphenyl-2,2'-disulfonate, di(2,2-dimethylpropyl) 5,5'-dimethyl-4,4'-dichlorobiphenyl-2,2'-disulfonate, di(2,2-dimethylpropyl) 6,6'-dimethyl-4,4'-dichlorobiphenyl-2,2'-disulfonate, di(2,2-dimethylpropyl) 3,3'-dimethoxy-4,4'-dichlorobiphenyl-2,2'-disulfonate, di(2,2-dimethylpropyl) 5,5'-dimethoxy-4,4'-dichlorobiphenyl-2,2'-disulfonate, di(2,2-dimethylpropyl) 6,6'-dimethoxy-4,4'-dichlorobiphenyl-2,2'-disulfonate, di(2,2-dimethylpropyl) 3,3'-diphenyl-4,4'-dichlorobiphenyl-2,2'-disulfonate, di(2,2-dimethylpropyl) 3,3'-diacetyl-4,4'-dichlorobiphenyl-2,2'-disulfonate, di(2,2-dimethylpropyl) 5,5'-diacetyl-4,4'-dichlorobiphenyl-2,2'-disulfonate,
dimethyl 4,4'-dibromobiphenyl-2,2'-disulfonate, diethyl 4,4'-dibromobiphenyl-2,2'-disulfonate, di(n-propyl) 4,4'-dibromobiphenyl-2,2'-disulfonate, diisopropyl 4,4'-dibromobiphenyl-2,2'-disulfonate, di(n-butyl) 4,4'-dibromobiphenyl-2,2'-disulfonate, diisobutyl 4,4'-dibromobiphenyl-2,2'-disulfonate, di(2,2-dimethylpropyl) 4,4'-dibromobiphenyl-2,2'-disulfonate, dicyclohexyl 4,4'-dibromobiphenyl-2,2'-disulfonate, di(n-octyl) 4,4'-dibromobiphenyl-2,2'-disulfonate, di(n-pentadecyl) 4,4'-dibromobiphenyl-2,2'-disulfonate, di(n-icosyl) 4,4'-dibromobiphenyl-2,2'-disulfonate,
N,N-dimethyl-4,4'-dibromobiphenyl-2,2'-disulfonami de, N,N-diethyl-4,4'-dibromobiphenyl-2,2'-disulfonamide, N,N-di(n-propyl)-4,4'-dibromobiphenyl-2,2'-disulfonamid e, N,N-diisopropyl-4,4'-dibromobiphenyl-2,2'-disulfonamide, N,N-di(n-butyl)-4,4'-dibromobiphenyl-2,2'-disulfonamide, N,N-diisobutyl-4,4'-dibromobiphenyl-2,2'-disulfonamide, N,N-di(2,2-dimethylpropyl)-4,4'-dibromobiphenyl-2,2'-di sulfonamide, N,N-di(n-octyl)-9,4'-dibromobiphenyl-2,2'-disulfonamide, N,N-di(n-dodecyl)-4,4'-dibromobiphenyl-2,2'-disulfonami de, N,N-di(n-icosyl)-4,4'-dibromobiphenyl-2,2'-disulfonamid e and N,N-diphenyl-4,4'-dibromobiphenyl-2,2'-disulfonamide.

Among them, diisopropyl 4,4'-dichlorobiphenyl-2,2'-disulfonate, di(2,2-dimethylpropyl) 4,4'-dichlorobiphenyl-2,2'-disulfonate, diisopropyl 4,4'-dibromobiphenyl-2,2'-disulfonate and di(2,2-dimethylpropyl) 4,4'-dibromobiphenyl-2,2'-disulfonate are preferable.

The dihalobiphenyl compound (1) can be produced by, for example, reacting a compound represented by the formula (8): 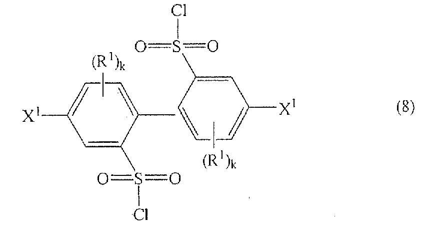 wherein R¹, X¹ and k are the same as described above (hereinafter, simply referred to as the compound (8)), with a compound represented by the formula (9): A-H (9)
wherein A is the same as described above (hereinafter, simply referred to as the compound (9)) in the presence of a tertiary amine compound or a pyridine compound.

Examples of the compound (8) include 4,4'-dichlorobiphenyl-2,2'-disulfonyl dichloride, 4,4'-dibromobiphenyl-2,2'-disulfonyl dichloride, 3,3'-dimethyl-4,4'-dichlorobiphenyl-2,2'-disulfonyl dichloride, 5,5'-dimethyl-4,4'-dichlorobiphenyl-2,2'-disulfonyl dichloride, 6,6'-dimethyl-4,4'-dichlorobiphenyl-2,2'-disulfonyl dichloride, 3,3'-dimethoxy-4,4'-dichlorobiphenyl-2,2'-disulfonyl dichloride, 5,5'-dimethoxy-4,4'-dichlorobiphenyl-2,2'-disulfonyl dichloride, 6,6'-dimethoxy-4,4'-dichlorobiphenyl-2,2'-disulfonyl dichloride, 3,3'-diphenyl-4,4'-dichlorobiphenyl-2,2'-disulfonyl dichloride, 3,3'-diacetyl-4,4'-dichlorobiphenyl-2,2'-disulfonyl dichloride, 5,5'-diacetyl-4,4'-dichlorobiphenyl-2,2'-disulfonyl dichloride, and 6,6'-diacetyl-4,4'-dichlorobiphenyl-2,2'-disulfonyl dichloride, and 4,4'-dichlorobiphenyl-2,2'-disulfonyl dichloride and 4,4'-dibromobiphenyl-2,2'-disulfonyl dichloride are preferable. As the compound (8), a commercially available one may be used, and one produced according to known methods described in, for example, Bull. Soc. Chim. Fr., 4, 49 (1931), 1047-1049 or the like may be used.

Examples of the compound (9) include isopropanol, isobutanol, 2,2-dimethylpropanol, cyclohexanol, n-octanol, n-pentadecanol, n-icosanol, diethylamine, diisopropylamine, 2,2-dimethylpropylamine, n-dodecylamine and n-icosylamine. As the compound (9), a commercially available one is usually used.

The used amount of the compound (9) is usually 0.2 mole or more per 1 mole of the group represented by -SO₂Cl in the compound (8) and there is no upper limit particularly. When the compound (9) is a liquid at the reaction temperature, large excess thereof may be used also to serve as the reaction solvent. The practical used amount of the compound (9) is 0.5 to 2 moles per 1 mole of the group represented by -SO₂Cl in the compound (8).

Examples of the tertiary amine compound include trimethylamine, triethylamine, tri(n-propyl)amine, tri(n-butyl)amine, diisopropylethylamine, tri(n-octyl)amine, tri(n-decyl)amine, triphenylamine, N,N-dimethylaniline, N,N,N',N'-tetramethylethylenediamine and N-methylpyrrolidine. A commercially available tertiary amine compound is usually used. The used amount of the tertiary amine compound is usually 1 mole or more per 1 mole of the group represented by -SO₂Cl in the compound (8) and there is no upper limit particularly. When the tertiary amine compound is a liquid at the reaction temperature, large excess thereof may be used also to serve as the reaction solvent. The practical used amount of the tertiary amine compound is 1 to 30 moles, preferably 0.5 to 20 moles and more preferably 1 to 10 moles per 1 mole of the group represented by -SO₂Cl in the compound (8).

Examples of the pyridine compound include pyridine and 4-dimethylaminopyridine. A commercially available pyridine compound is usually used. The used amount of the pyridine compound is usually 1 mole or more per 1 mole of the group represented by -SO₂Cl in the compound (8) and there is no upper limit particularly. When the pyridine compound is a liquid at the reaction temperature, large excess thereof may be used also to serve as the reaction solvent. The practical used amount of the pyridine compound is 1 to 30 moles, preferably 1 to 20 moles and more preferably 1 to 10 moles per 1 mole of the group represented by -SO₂Cl in the compound (8).

The reaction of the compound (8) and the compound (9) is usually conducted by mixing the compound (8), the compound (9) and the tertiary amine compound or the pyridine compound in the presence of a solvent. The mixing order is not particularly limited.

Examples of the solvent include an aromatic hydrocarbon solvent such as toluene and xylene; an ether solvent such as diethyl ether, tetrahydrofuran and 1,4-dioxane; an aprotic polar solvent such as dimethylsulfoxide, N-methyl-2-pyrrolidone, N,N-dimethylformamide, N,N-dimethylacetamide and hexamethylphosphoric triamide; a halogenated hydrocarbon solvent such as dichloromethane, chloroform, dichloroethane, chlorobenzene and dichlorobenzene. Alternatively, as described above, when the compound (9), the tertiary amine compound or the pyridine compound is a liquid at the reaction temperature, they may be used as a reaction solvent. The solvent may be used alone and two or more kinds thereof may be mixed to use. The used amount of the solvent is not particularly limited.

The temperature of the reaction of the compound (8) and the compound (9) is usually -30 to 150°C and preferably -10 to 70°C. The reaction time is usually 0.5 to 24 hours.

After completion of the reaction, for example, an organic layer containing the dihalobiphenyl compound (1) can be obtained by adding water or an aqueous acid solution and if necessary, a water-insoluble organic solvent to the reaction mixture followed by conducting an extraction. The dihalobiphenyl compound (1) can be isolated by concentrating the obtained organic layer, if necessary, after washing it with water, an aqueous alkali solution or the like. The dihalobiphenyl compound (1) isolated may be further purified by a conventional means such as silica gel chromatography and recrystallization.

Examples of the water-insoluble organic solvent include an aromatic hydrocarbon solvent such as toluene and xylene; an aliphatic hydrocarbon solvent such as hexane and heptane; a halogenated hydrocarbon solvent such as dichloromethane, dichloroethane and chloroform; and an ester solvent such as ethyl acetate. The used amount thereof is not particularly limited.

The dihalobiphenyl compound (1) can also be produced by reacting the compound (8) with a compound represented by the formula (10):

A-M (10)

wherein A is the same meaning as above and M represents an alkali metal atom (hereinafter, simply referred to as the compound (10)).

Examples of the alkali metal atom include lithium atom, sodium atom, potassium atom and cesium atom.

Examples of the compound (10) include lithium isopropoxide, lithium isobutoxide, lithium 2,2-dimethylpropoxide, lithium cyclohexyloxide, lithium diethylamide, lithium diisopropylamide, lithium 2,2-dimethylpropylamide, lithium n-dodecylamide, lithium n-icosylamide, sodium isobutoxide and potassium isobutoxide. As the compound (10), a commercially available one may be used and one produced according to known methods may be used.

The used amount of the compound (10) is usually 0.2 to 2 moles per 1 mole of the group represented by -SO₂Cl in the compound (8).

The reaction of the compound (8) and the compound (10) is usually conducted by mixing the compound (8) with the compound (10) in the presence of a solvent. The mixing order is not particularly limited.

Examples of the solvent include an aromatic hydrocarbon solvent such as toluene and xylene; an ether solvent such as diethyl ether, tetrahydrofuran and 1,4-dioxane; an aprotic polar solvent such as dimethylsulfoxide, N-methyl-2-pyrrolidone, N,N-dimethylformamide, N,N-dimethylacetamide and hexamethylphosphoric triamide; a halogenated hydrocarbon solvent such as dichloromethane, chloroform, dichloroethane, chlorobenzene and dichlorobenzene. The solvent may be used alone and two or more kinds thereof may be mixed to use. The used amount of the solvent is not particularly limited.

The temperature of the reaction of the compound (8) and the compound (10) is usually -30 to 150°C and preferably -10 to 70°C. The reaction time is usually 0.5 to 24 hours.

After completion of the reaction, an organic layer containing the dihalobiphenyl compound (1) can be obtained by adding water and if necessary, a water-insoluble organic solvent to the reaction mixture followed by conducting an extraction. The dihalobiphenyl compound (1) can be isolated by concentrating the obtained organic layer, if necessary, after washing with water or the like. The dihalobiphenyl compound (1) isolated may be further purified by a conventional means such as silica gel chromatography and recrystallization. Examples of the water-insoluble organic solvent include the same as described above.

Next, a method for producing a polyarylene will be illustrated.

A polyarylene consisting of a repeating unit represented by the formula (5): 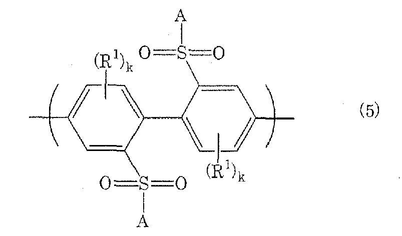 wherein A, P¹ and k represent the same meanings as defined above (hereinafter, simply referred to as the repeating unit (5)) is obtained by polymerizing only the dihalobiphenyl compound (1).

Alternatively, a polyarylene comprising the above-mentioned repeating unit (5) and a segment represented by the formula (6): 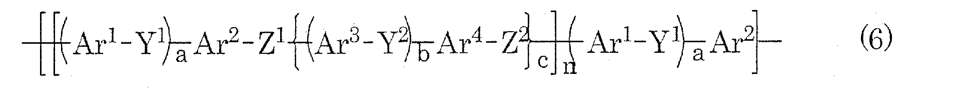 wherein a, b and c are the same or different, and each represents 0 or 1, and n represents an integer of 5 or more, Ar¹, Ar², Ar³ and Ar⁴ are the same or different, and each represents a divalent aromatic group, and the divalent aromatic group may be substituted with at least one substituent selected from the group consisting of
a C1-C20 alkyl group which may be substituted with at least one substituent selected from the group consisting of a fluorine atom, a cyano group, a C1-C20 alkoxy group, a C6-C20 aryl group and a C6-C20 aryloxy group;
a C1-C20 alkoxy group which may be substituted with at least one substituent selected from the group consisting of a fluorine atom, a cyano group, a C1-C20 alkoxy group, a C6-C20 aryl group and a C6-C20 aryloxy group;
a C6-C20 aryl group which may be substituted with at least one substituent selected from the group consisting of a fluorine atom, a cyano group, a C1-C20 alkoxy group and a C6-C10 aryloxy group;
a C6-C20 aryloxy group which may be substituted with at least one substituent selected from the group consisting of a fluorine atom, a cyano group, a C1-C20 alkoxy group and a C6- C20 aryloxy group; and
a C2-C20 acyl group which may be substituted with at least one substituent selected from the group consisting of a fluorine atom, a cyano group, a C1-C20 alkoxy group, a C6-C20 aryl group and a C6-C20 aryloxy group, Y¹ and Y² are the same or different, and each represents a single bond, -CO-, -SO₂-, -C(CH₃)₂-, -C(CF₃)₂- or a fluorene-9,9-diyl group, and
Z¹ and Z² are the same or different, and each represents -O- or -S- (hereinafter, simply referred to as the segment (6)), is obtained by polymerizing the dihalobiphenyl compound (1) and an aromatic compound represented by the formula (2): 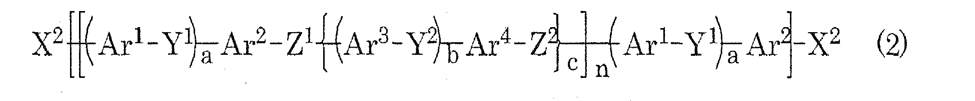
wherein a, b, c, n, Ar¹, Ar², Ar³, Ar⁴, Y¹, Y², Z¹ and Z² are the same meanings as defined above, and X² represents a chlorine atom, a bromine atom or an iodine atom (hereinafter, simply referred to as the aromatic compound (2)).

A polyarylene comprising the above-mentioned repeating unit (5) and a repeating unit represented by the formula (7): 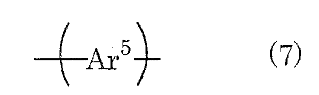 wherein Ar⁵ represents a divalent aromatic group, and the divalent aromatic group may be substituted with at least one substituent selected from the group consisting of
a C1-C20 alkyl group which may be substituted with at least one substituent selected from the group consisting of a fluorine atom, a cyano group, a C1-C20 alkoxy group, a C6-C20 aryl group and a C6-C20 aryloxy group;
a C1-C20 alkoxy group which may be substituted with at least one substituent selected from the group consisting of a fluorine atom, a cyano group, a C1-C20 alkoxy group, a C6-C20 aryl group and a C6-C20 aryloxy group;
a C6-C20 aryl group which may be substituted with at least one substituent selected from the group consisting of a fluorine atom, a cyano group, a C1-C20 alkoxy group and a C6-C20 aryloxy group;
a C6-C20 aryloxy group which may be substituted with at least one substituent selected from the group consisting of a fluorine atom, a cyano group, a C1-C20 alkoxy group and a C6- C20 aryloxy group; and
a C2-C20 acyl group which may be substituted with at least one substituent selected from the group consisting of a fluorine atom, a cyano group, a C1-C20 alkoxy group, a C6-C20 aryl group and a C6- C20 aryloxy group (hereinafter, simply referred to as the repeating unit (7)), by polymerizing the dihalobiphenyl compound (1) and an aromatic compound represented by the formula (3):

   X³-Ar⁵-X³ (3)

   wherein Ar⁵ represents the same meaning as defined above and X³ represents a chlorine atom, a bromine atom or an iodine atom (hereinafter, simply referred to as the aromatic compound (3)).

In the polyarylene comprising the repeating unit (5) and the segment (6) and the polyarylene comprising the repeating unit (5) and the repeating unit (7), at least two repeating unit (5) are usually continued.

The weight average molecular weight of these polyarylenes in terms of polystyrene is usually 1,000 to 2,000,000. When these polyarylenes are used as a polyelectrolyte for proton-exchange membrane fuel cell, preferable weight average molecular weight thereof is 2,000 to 1,000,000 and more preferable one is 3,000 to 800,000.

Specific examples of the repeating unit (5) include repeating units represented by the following formulae (5a) to (5d):

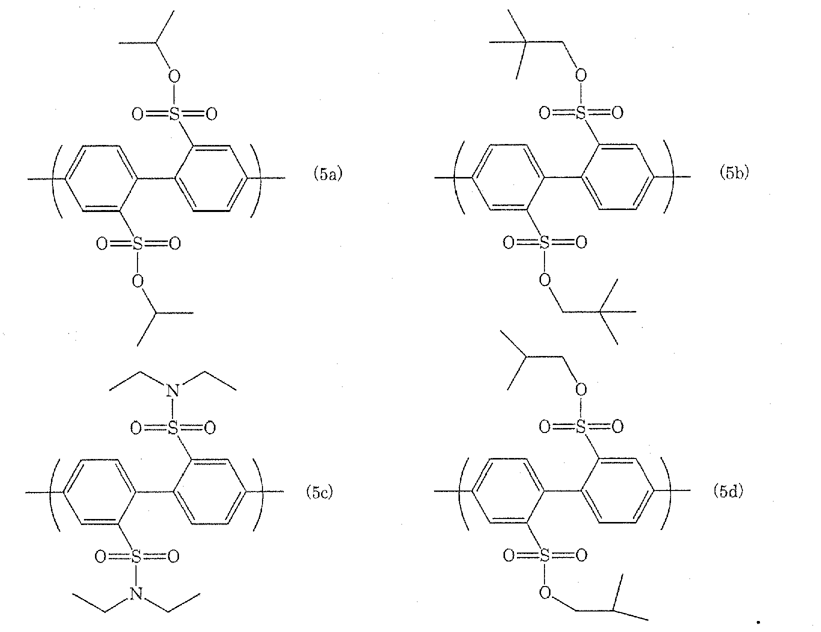

Examples of the divalent aromatic group in the aromatic compound (2) include a divalent monocyclic aromatic group such as a 1,3-phenylene group, a 1,9-phenylene group and 4,4'-biphenyl-1,1'-diyl group; a divalent condensed ring type aromatic group such as a naphthalene-1,3-diyl group, a naphthalene-1,4-diyl group, a naphthalene-1,5-diyl group, a naphthalene-1,6-diyl group, a naphthalene-1,7-diyl group, a naphthalene-2,6-diyl group, a naphthalene-2,7-diyl group and a 9H-fluorene-2,7-diyl group; and a divalent heteroaromatic group such as a pyridine-2,5-diyl group, a pyridine-2,6-diyl group, a quinoxaline-2,6-diyl group, a thiophene-2,5-diyl group, 2,2'-bithiophene-5,5'-diyl group, a pyrrole-2,5-diyl group, a 2,2'-bipyridine-5,5'-diyl group, a pyrimidine-2,5-diyl group, a quinoline-5,8-diyl group, a quinoline-2,6-diyl group, an isoquinoline-1,4-diyl group, an isoquinoline-5,8-diyl group, 2,1,3-benzothiazole-4,7-diyl group, a benzimidazole-4,7-diyl group, a quinoxaline-5,8-diyl group and a quinoxaline-2,6-diyl group. Among them, the divalent monocyclic aromatic group and the divalent condensed ring type aromatic group are preferable, and a 1,4-phenylene group, a naphthalene-1,4-diyl group, a naphthalene-1,5-diyl group, a naphthalene-2,6-diyl group and a naphthalene-2,7-diyl group are more preferable.

The above-mentioned divalent aromatic group may be substituted with at least one substituent selected from the group consisting of a C1-C20 alkyl group which may be substituted with at least one substituent selected from the group consisting of a fluorine atom, a cyano group, a C1-C20 alkoxy group, a C6-C20 aryl group and a C6-C20 aryloxy group; a C1-C20 alkoxy group which may be substituted with at least one substituent selected from the group consisting of a fluorine atom, a cyano group, a C1-C20 alkoxy group, a C6-C20 aryl group and a C6-C20 aryloxy group; a C6-C20 aryl group which may be substituted with at least one substituent selected from the group consisting of a fluorine atom, a cyano group, a C1-C20 alkoxy group and a C6-C20 aryloxy group; a C6-C20 aryloxy group which may be substituted with at least one substituent selected from the group consisting of a fluorine atom, a cyano group, a C1-C20 alkoxy group and a C6- C20 aryloxy group; and a C2-C20 acyl group which may be substituted with at least one substituent selected from the group consisting of a fluorine atom, a cyano group, a C1-C20 alkoxy group, a C6-C20 aryl group and a C6-C20 aryloxy group.

Examples of the C1-C20 alkyl group, the C1-C20 alkoxy group, the C6-C20 aryl group, the C6-C20 aryloxy group and the C2-C20 acyl group include the same as described above.

Examples of the aromatic compound (2) include the following compounds and the following compounds wherein both terminal chlorine atoms are replaced to bromine atoms.

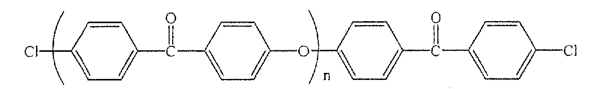

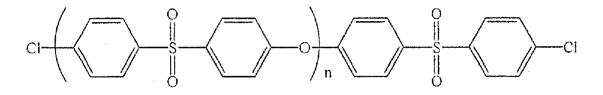

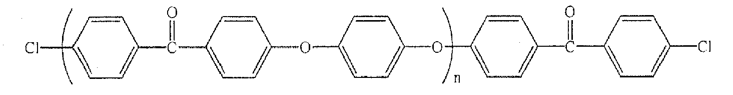

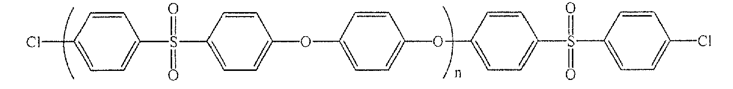

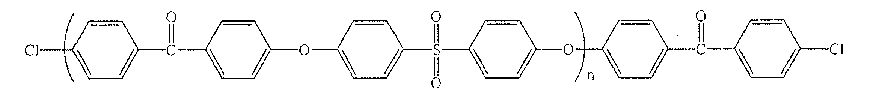

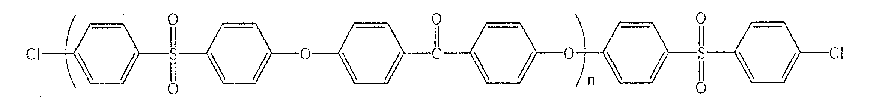

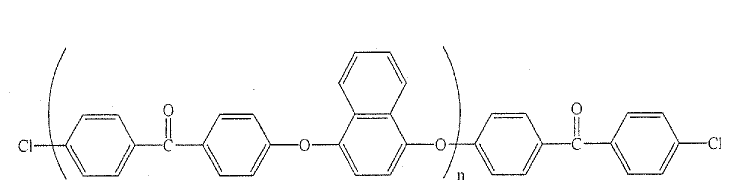

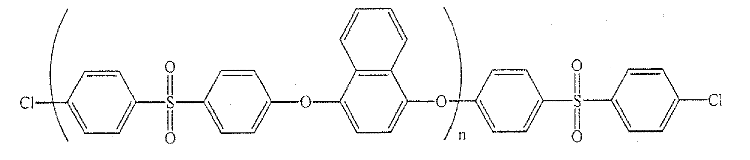

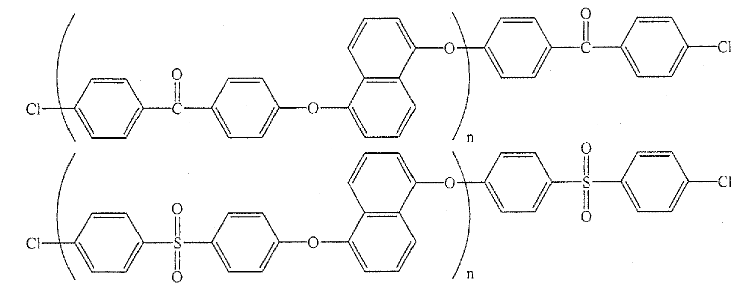

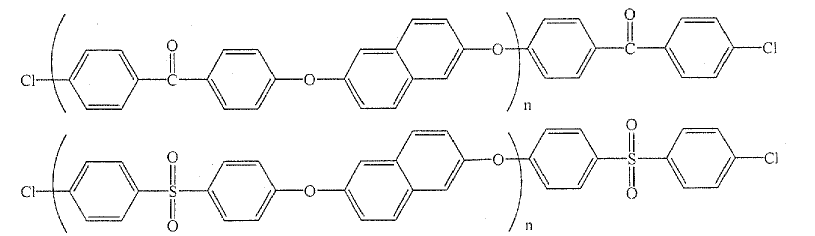

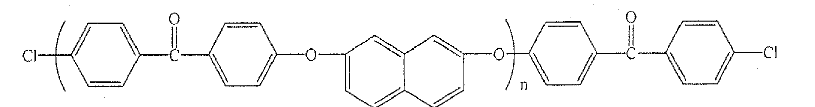

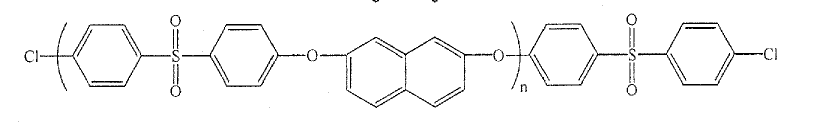

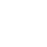

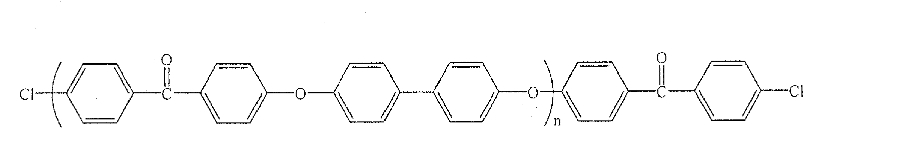

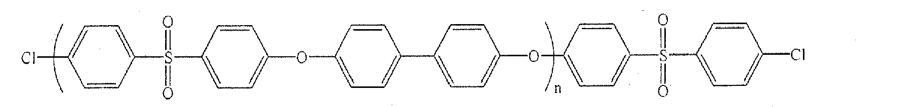

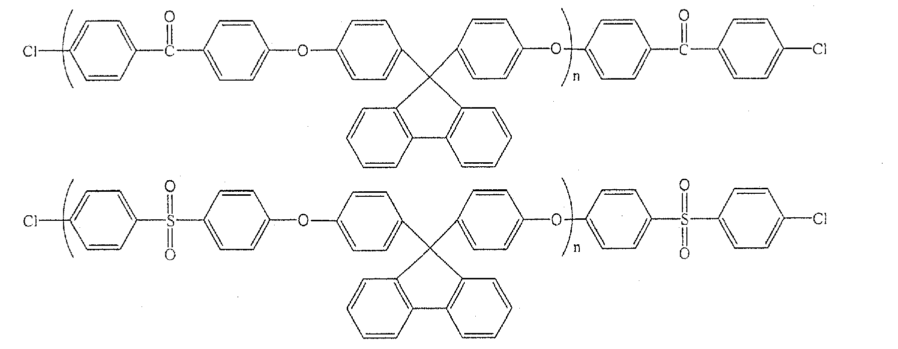

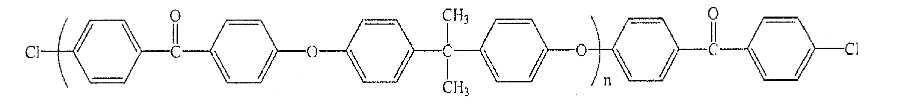

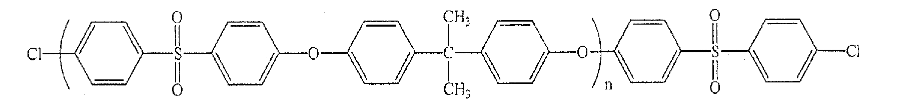

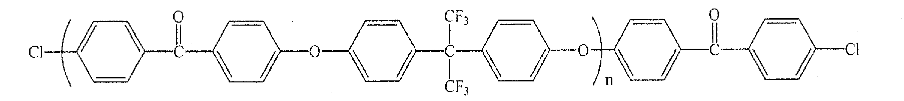

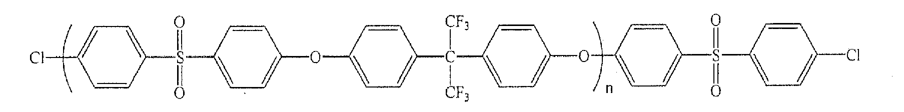

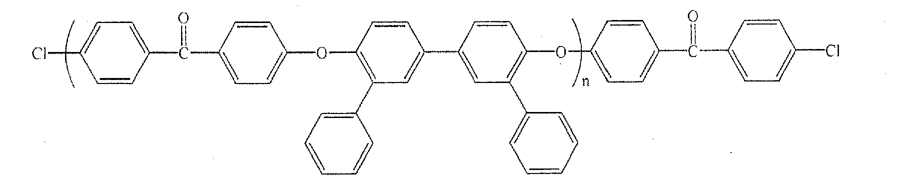

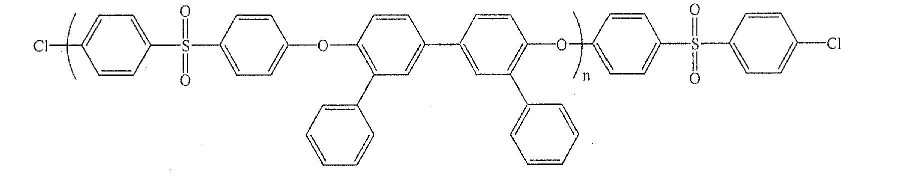

As the aromatic compound (2), one produced according to known methods such as JP Patent No. 2745727 may be used or a commercially available one may be used. Examples of the commercially available one include SUMIKA EXCEL PES manufactured by Sumitomo Chemical Company, Limited.

As the aromatic compound (2), one having 2,000 or more of weight average molecular weight in terms of polystyrene is preferably used, and one having 3,000 or more of weight average molecular weight in terms of polystyrene is more preferably used.

Specific examples of the segment (6) include segments represented by the following formulae (6a) to (6y). Meanwhile, in the following formulae, n represents the same meaning as defined above, and n is preferably 10 or more. The weight average molecular weight of the segment (6) in terms of polystyrene is usually 2,000 or more, and preferably 3,000 or more.

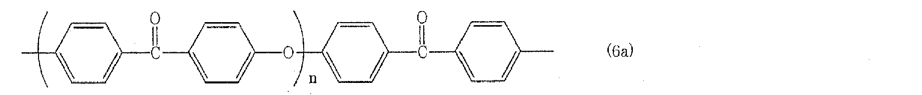

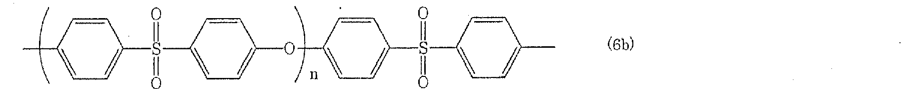

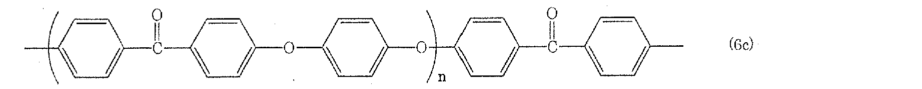

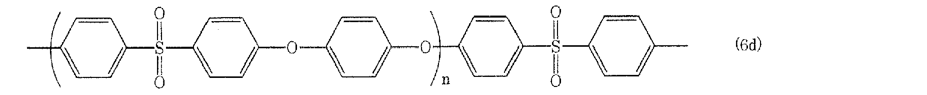

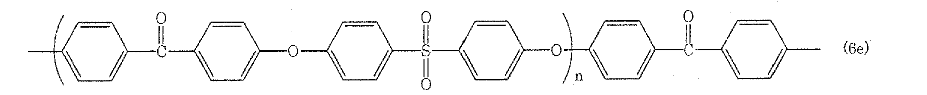

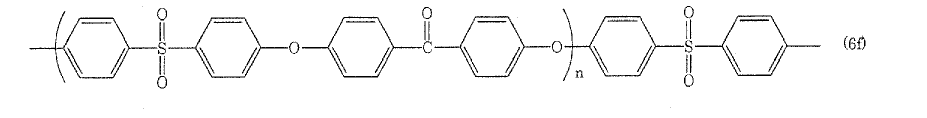

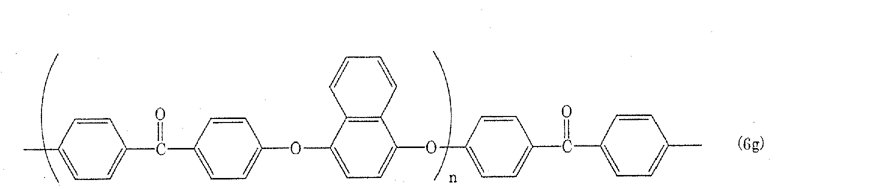

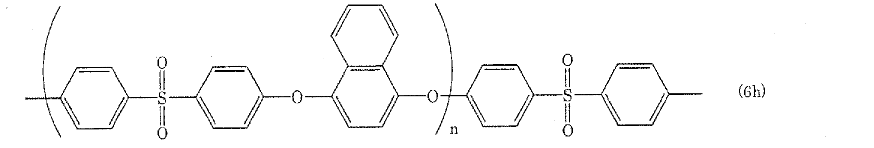

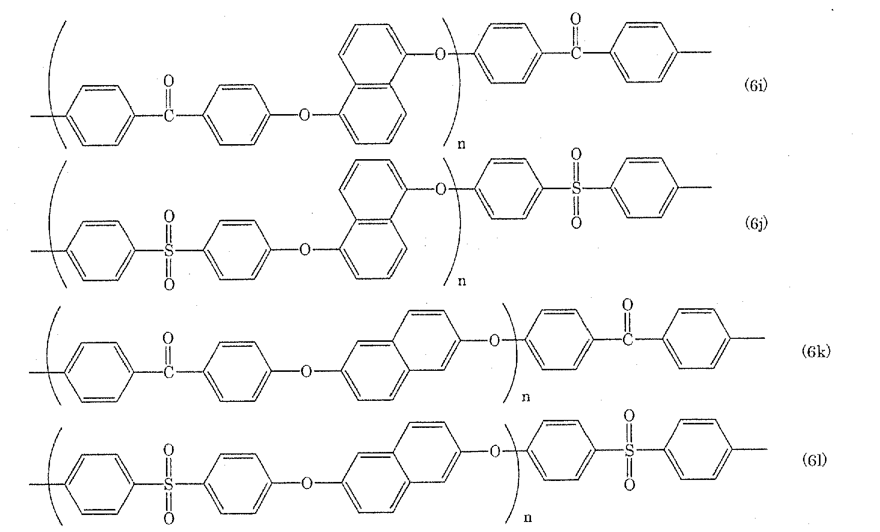

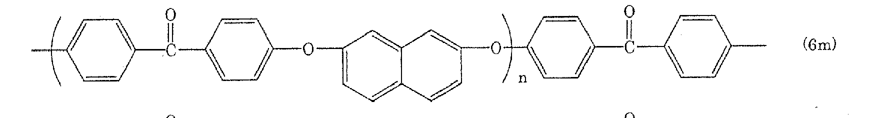

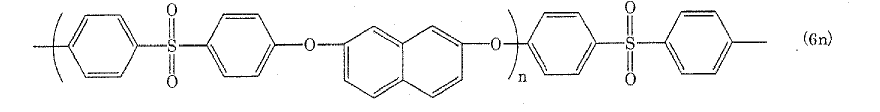

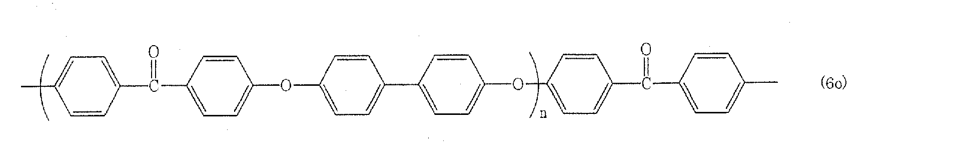

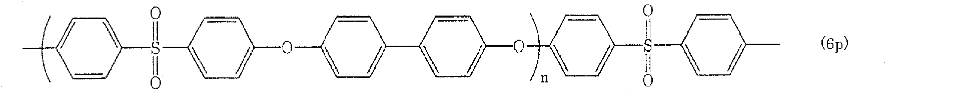

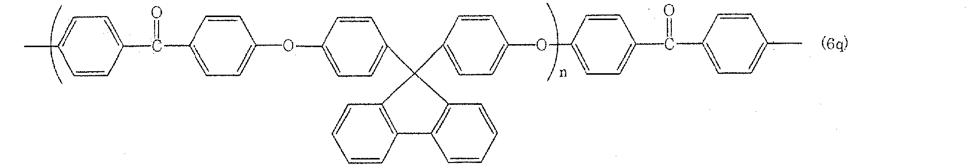

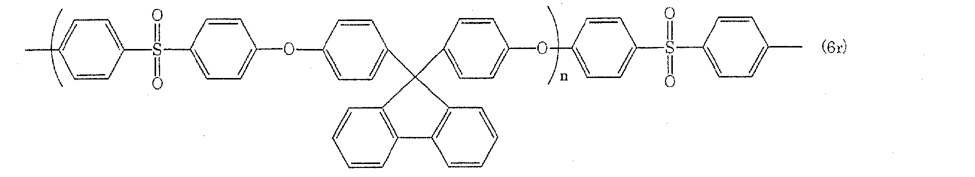

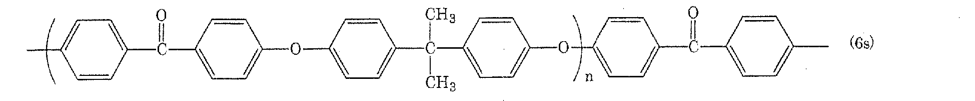

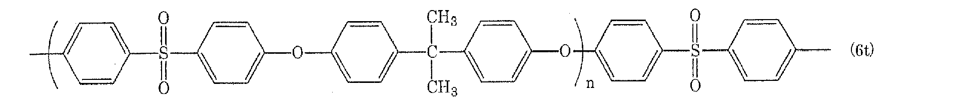

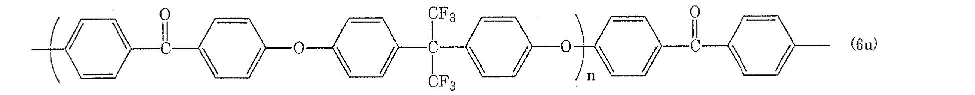

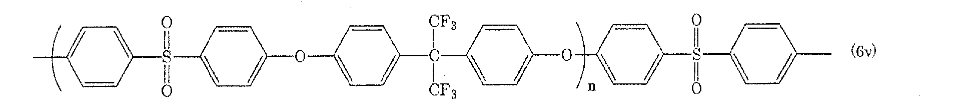

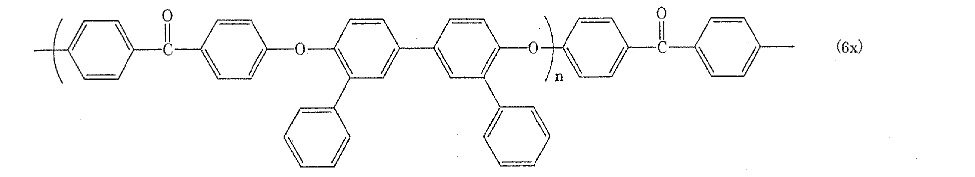

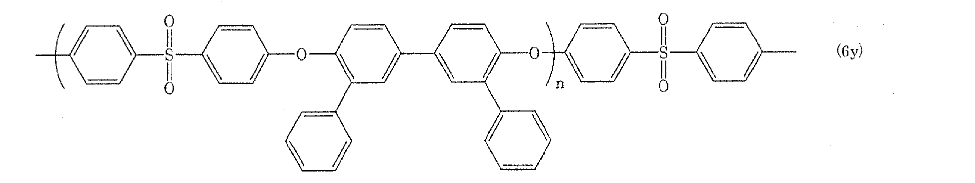

Examples of the polyarylene comprising the repeating unit (5) and the segment (6) include a polyarylene comprising any one of the above-mentioned repeating units represented by the formulae (5a) to (5d) and any one of the above-mentioned segments represented by the formulae (6a) to (6y). Specific examples thereof include polyarylenes represented by the following formulae (I) to (VII). Herein, in the following formulae, n represents the same meaning as defined above and p represents an integer of 2 or more.

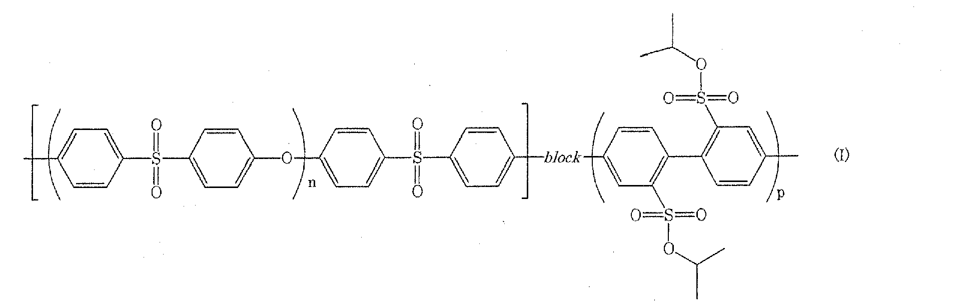

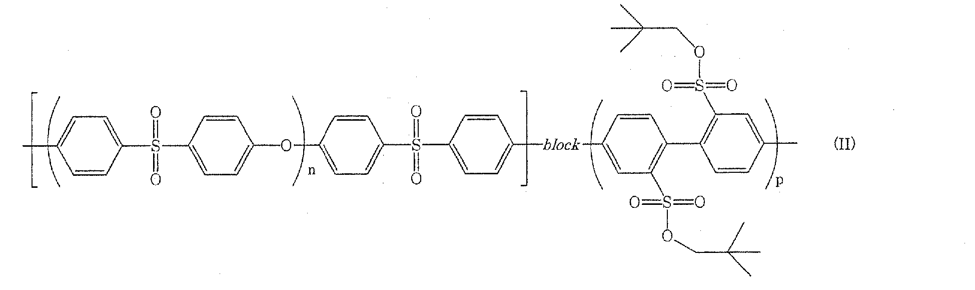

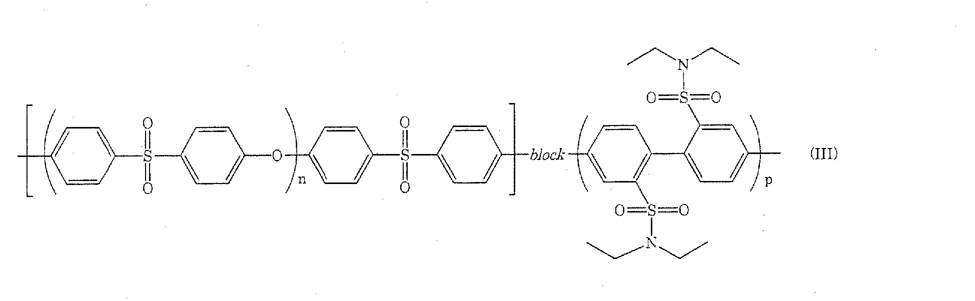

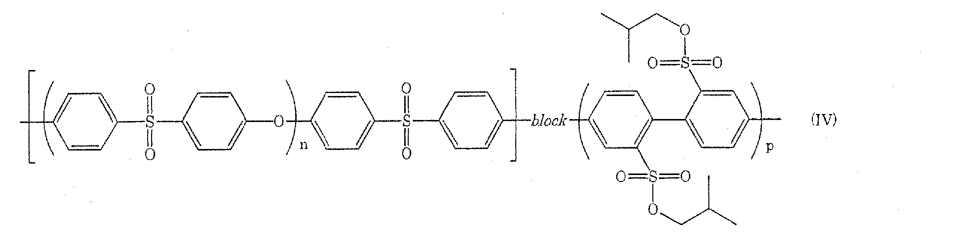

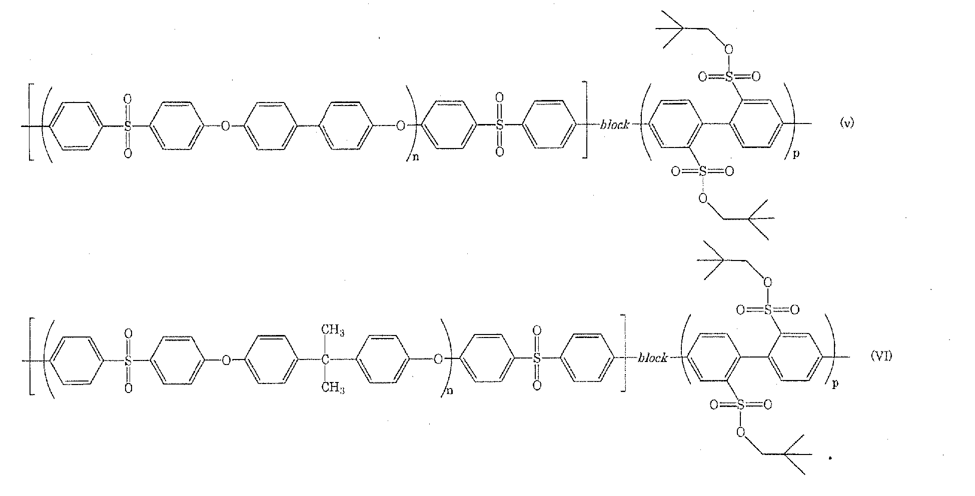

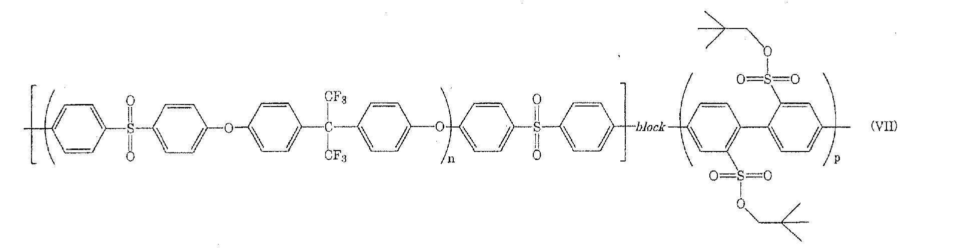

The amount of the repeating unit (5) in the polyarylene comprising the repeating unit (5) and the segment (6) is preferably 5% by weight or more and 95% by weight or less, and more preferably 30% by weight or more and 90% by weight or less. The amount of the segment (6) in the polyarylene comprising the repeating unit (5) and the segment (6) is preferably 5% by weight or more and 95% by weight or less, and more preferably 10% by weight or more and 70% by weight or less.

Examples of the divalent aromatic group in the aromatic compound (3) include the same as the divalent aromatic group of the aromatic compound (3) described above.

Examples of the aromatic compound (3) include 2,5-dichloro-4'-phenoxybenzophenone, 1,4-dibromo-2-ethylbenzene, 1,4-dibromo-2-methoxybenzene, dimethyl 2,5-dibromoterephthalate, 1,4-dibromonaphthalene, 1,1'-dibromo-4,4'-biphenyl, 1,4-dibromo-2,5-dihexyloxybenzene, 1-bromo-4-chlorobenzene, 1,4-dichlorobenzene, 1-bromo-4-chlorotoluene, 1-bromo-4-chloro-2-propyl-benzene, 2,5-dibromo-4'-phenoxybenzophenone, 2,5-dibromothiophene, 2,5-dibromo-3-hexylthiophene, 2,5-dibromo-3-dodecylthiophene, 5,5'-dibromo-2,2'-bithiophene, 2,5-dibromo-3-cyclohexylthiophene, 2,5-dichloro-3-octylthiophene, 2,5-dichloro-3-phenylthiophene, 1-methyl-2,5-dichloropyrrole, 1-hexyl-2,5-dibromopyrrole, 1-octyl-2,5-dichloropyrrole, 2,5-dichloropyridine, 3,5-dichloropyridine, 2,5-dibromopyridine, 3-methyl-2,5-dichloropyridine, 3-hexyl-2,5-dichloropyridine, 5,5'-dichloro-2,2'-bipyridine, 3,3'-dimethyl-5,5'-dichloro-2,2'-bipyridine, 3,3'-dioctyl-5,5'-dibromo-2,2'-bipyridine, 2,5-dichloropyrimidine, 2,5-dibromopyrimidine, 5,8-dichloroquinoline, 5,8-dibromoquinoline, 2,6-dichloroquinoline, 1,4-dichloroisoquinoline, 5,8-dibromoisoquinoline, 4,7-dibromo-2,1,3-benzothioazole, 4,7-dichlorobenzoimidazole, 5,8-dichloroquinoxaline, 5,8-dichloro-2,3-diphenylquinoxaline, 2,6-dibromoquinoxaline, 2,7-dibromo-9,9-dihexyl-9H-fluorene, 2,7-dibromo-9,9-dioctyl-9H-fluorene, 2,7-dibromo-9,9-didodecyl-9H-fluorene, 2,7-dichloro-9,9-dihexyl-9H-fluorene, 2,7-dichloro-9,9-dioctyl-9H-fluorene, 2,7-dichloro-9,9-didodecyl-9H-fluorene, 2-bromo-7-chloro-9,9-dihexyl-9H-fluorene, 2-bromo-7-chloro-9,9-dioctyl-9H-fluorene and 2-bromo-7-chloro-9,9-didodecyl-9H-fluorene.

As the aromatic compound (3), a commercially available one may be used or one produced according to known methods may be used.

Specific examples of the repeating unit (7) include repeating units represented by the following formulae (7a) and (7b).

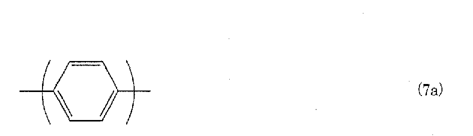

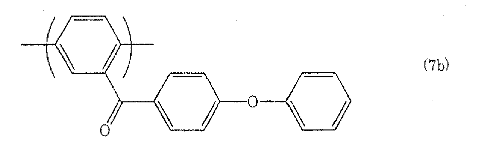

Examples of the polyarylene comprising the repeating units (5) and (7) include polyarylenes comprising any one of the above-mentioned repeating units represented by the formulae (5a) to (5c) and any one of the above-mentioned repeating units represented by the formulae (7a) to (7b). Specific examples thereof include polyarylenes represented by the following formulae (VIII) to (XI).

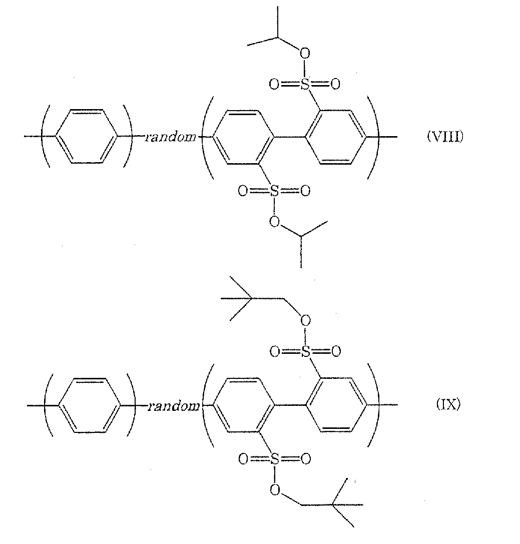

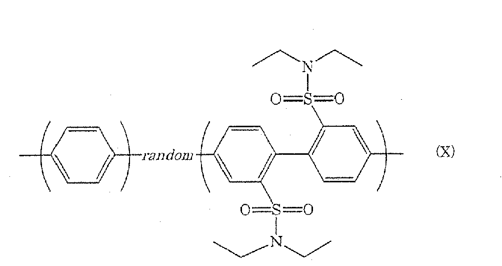

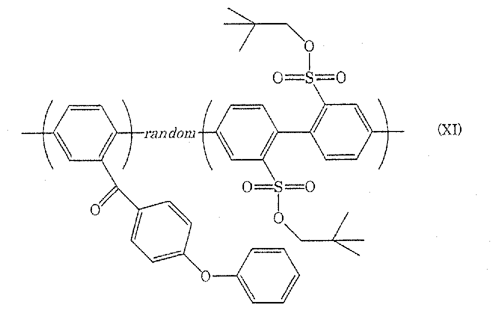

The amount of the repeating unit (5) in the polyarylene comprising the repeating units (5) and (7) is preferably 1% by weight or more and 99% by weight or less, and the amount of the repeating unit (7) therein is preferably 1% by weight or more and 99% by weight or less.

The polyarylene can be produced by polymerizing only the dihalobiphenyl compound (1), or the dihalobiphenyl compound (1) with the aromatic compound (2) or the aromatic compound (3), in the presence of catalytic amounts of a divalent nickel compound, a trivalent phosphorus ligand and zinc.

The polyarylene consisting of the repeating unit (5) can be obtained by polymerizing only the dihalobiphenyl compound (1). The polyarylene comprising the repeating unit (5) and the segment (6) can be obtained by polymerizing the dihalobiphenyl compound (1) and the aromatic compound (2). The polyarylene comprising the repeating units (5) and (7) can be obtained by polymerizing the dihalobiphenyl compound (1) and the aromatic compound (3).

Alternatively, the polyarylene comprising the repeating unit (5) and the segment (6) can be also produced by polymerizing only the dihalobiphenyl compound (1) followed by adding the aromatic compound (2) to further conduct a polymerization reaction. The polyarylene comprising the repeating units (5) and (7) can be also produced by polymerizing only the dihalobiphenyl compound (1) followed by adding the aromatic compound (3) to further conduct a polymerization reaction.

When the dihalobiphenyl compound (1) is polymerized with the aromatic compound (2) or the aromatic compound (3), the content of the repeating unit (5) in the obtained polyarylene can be adjusted by adjusting arbitrarily the used amount of the dihalobiphenyl compound (1).

Examples of the divalent nickel compound include a nickel halide such as nickel fluoride, nickel chloride, nickel bromide and nickel iodide, a nickel carboxylate such as nickel formate and nickel acetate, nickel sulfate, nickel carbonate, nickel nitrate, nickel acetylacetonate and (dimethoxyethane)nickel chloride, and a nickel halide is preferable.

While the used amount of the divalent nickel compound is catalytic amounts, when the used amount thereof is too small, a polyarylene having a small molecular weight tends to be obtained, and when the used amount thereof is too much, the aftertreatment after the polymerization reaction tends to be cumbersome. Therefore, the used amount of the divalent nickel compound is usually 0.001 to 0.8 mole and preferably 0.01 to 0.3 mole per 1 mole of the used monomer. In the present invention, monomer means the dihalobiphenyl compound (1) when only the dihalobiphenyl compound (1) is polymerized, the dihalobiphenyl compound (1) and the aromatic compound (2) when the dihalobiphenyl compound (1) is polymerized with the aromatic compound (2), and the dihalobiphenyl compound (1) and the aromatic compound (3) when the dihalobiphenyl compound (1) is polymerized with the aromatic compound (3), respectively.

Examples of the trivalent phosphorus ligand include a monodentate phosphorus ligand such as a triarylphosphine and a trialkylphosphine, and a bidentate phosphorus ligand, and the bidentate phosphorus ligand is preferable.

As the bidentate phosphorus ligand, a bidentate phosphorus ligand represented by the formula (4): 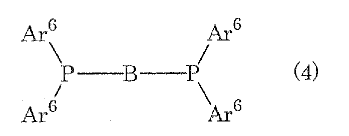 wherein B represents a methylene group, an ethylene group, a trimethylene group, a tetramethylene group, a ferrocene-1,1'-diyl group, a 1,1'-oxybis(2,2'-phenylene) group, a xanthene-4,5-diyl group, a phenoxazine-4,6-diyl group, a 1,1'-binaphthyl-2,2'-diyl group, a 1,1'-biphenyl-2,2'-diyl group or a [2.2]-paracyclophane-4,12-diyl group, and Ar⁶ represents a C6-C20 aryl group which may be substituted with at least one group selected from the group consisting of a fluorine atom, a trifluoromethyl group and a C1-C20 alkoxy group (hereinafter, simply referred to as the bidentate phosphorus ligand (4)) is preferable.

Examples of the C1-C20 alkoxy group include a methoxy group, an ethoxy group, a n-propoxy group, an isopropoxy group, an n-butoxy group, a sec-butoxy group, a tert-butoxy group, an n-pentyloxy group, a 2,2-dimethylpropoxy group, an n-hexyloxy group, a cyclohexyloxy group, an n-heptyloxy group, an n-octyloxy group, an n-nonyloxy group, an n-decyloxy group, an n-undecyloxy group, an n-dodecyloxy group, an n-tridecyloxy group, an n-tetradecyloxy group, an n-pentadecyloxy group, an n-hexadecyloxy group, an n-heptadecyloxy group, an n-octadecyloxy group, an n-nonadecyloxy group and an n-icosyloxy group. A methoxy group is preferable.

Examples of the C6-C20 aryl group include a phenyl group, a 4-methylphenyl group, a 2-methylphenyl group, a 1-naphthyl group, a 2-naphthyl group, a 3-phenanthryl group and a 2-anthryl group, and a phenyl group is preferable.

Examples of Ar⁶ include a phenyl group, a 2-fluorophenyl group, a 3-fluorophenyl group, a 4-fluorophenyl group, a 2-methylphenyl group, a 3-methylphenyl group, a 4-methylphenyl group, a 2-methoxyphenyl group, a 3-methoxyphenyl group, a 4-methoxyphenyl group, a 2-trifluoromethylphenyl group, a 3-trifluoromethylphenyl group, a 4-trifluoromethylphenyl group, a 3,5-ditrifluoromethylphenyl group, a 3,5-difluorophenyl group and a pentafluorophenyl group, and a phenyl group, a 4-methoxyphenyl group and 4-trifluoromethylphenyl group are preferable.

As B, a ferrocene-1,1'-diyl group and a 1,1'-oxybis(2,2'-phenylene) group are preferable.

Examples of the divalent phosphorus ligand (4) include bis(diphenylphosphino)methane, 1,2-bis(diphenylphosphino)ethane, 1,3-bis(diphenylphosphino)propane, 1,4-bis(diphenylphosphino)butane, 1,1'-bis(diphenylphosphino)ferrocene, 1,1'-bis(di(4-fluorophenyl)phosphino)ferrocene, 1,1'-bis(di(2-methylphenyl)phosphino)ferrocene, 1,1'-bis(di(4-methoxyphenyl)phosphino)ferrocene, 1,1'-bis(di(4-trifluoromethylphenyl)phosphino)ferrocene, 1,1'-bis(di(3,5-ditrifluoromethylphenyl)phosphino)ferro cene, 1,1'-bis(di(3,5-difluorophenyl)phosphino)ferrocene, bis(2-diphenylphosphinophenyl) ether, 9,9-dimethyl-4,5-bis(diphenylphosphino)xanthene, 4,6-bis(diphenylphosphino)phenoxazine, 2,2'-bis(diphenylphosphino)-1,1'-binaphthyl, 2,2'-bis(diphenylphosphino)-1,1'-biphenyl, 5,5'-bis(diphenylphosphino)-2,2,2',2'-tetrafluoro-4,4'-bi-1,3-benzodioxole and 4,12-bis(diphenylphosphino)-[2.2]-paracyclophane, and 1,3-bis(diphenylphosphino)propane, 1,4-bis(diphenylphosphino)butane, 1,1'-bis(diphenylphosphino)ferrocene, 1,1'-bis(di(4-methoxyphenyl)phosphino)ferrocene, 1,1'-bis(di(4-trifluoromethylphenyl)phosphino)ferrocene and bis(2-diphenylphosphinophenyl) ether are preferable, and 1,1'-bis(diphenylphosphino)ferrocene, 1,1'-bis(di(4-methoxyphenyl)phosphino)ferrocene, 1,1'-bis(di(4-trifluoromethylphenyl)phosphino)ferrocene and bis(2-diphenylphosphinophenyl) ether are more preferable.

As the bidentate phosphorus ligand (4), a commercially available one may be used and one produced according to known methods described in, for example, Organometallics, 21, 4853-4861 (2001) or the like, may be used.

The triarylphosphine may be a phosphine wherein three above-mentioned C6-C20 aryl groups which may be substituted with at least one group selected from the group consisting of a fluorine atom, a trifluoromethyl group, a C1-C20 alkyl group and a C1-C20 alkoxy group, are bonded to a phosphorus atom. Specific examples thereof include triphenylphosphine, tri-o-tolylphosphine, tri-m-tolylphosphine, tri-p-tolylphosphine, tris(1-naphthyl)phosphine, tris(o-methoxyphenyl)phosphine, tris(pentafluorophenyl)phosphine, tris(p-trifluoromethylphenyl)phosphine, tris(4-fluorophenyl)phosphine and tri-2-furylphosphine, and triphenylphosphine is preferable. The trialkylphosphine may be a phosphine wherein three above-mentioned C1-C20 alkyl groups are bonded to a phosphorus atom. Specific examples thereof include tri-tert-butylphosphine, tri-n-butylphosphine, triethylphosphine and tricylohexylphosphine, and tricylohexylphosphine is preferable.

As the triarylphosphine and trialkylphosphine, a commercially available one may be used and one produced according to known methods may be used.

A nickel complex to which the trivalent phosphorus ligand is coordinated may be previously prepared by contacting the trivalent phosphorus ligand and the divalent nickel compound and the prepared nickel complex may be used.

The used amount of the trivalent phosphorus ligand is usually 0.2 to 20 moles and preferably 1 to 4 moles per 1 mole of the divalent nickel compound.

The used amount of zinc is usually 1 mole or more per 1 mole of the monomer. While the upper limit thereof is not limited particularly, when the used amount thereof is too much, the aftertreatment after the polymerization reaction tends to be cumbersome and tends to be economically disadvantage. Therefore, the practical used amount thereof is 10 moles or less and preferably 5 moles or less.

In order to accelerate the reaction rate of the polymerization reaction, a halide salt may be used. Examples of the halide salt include sodium halide such as sodium fluoride, sodium chloride, sodium bromide and sodium iodide, potassium halide such as potassium fluoride, potassium chloride, potassium bromide and potassium iodide, and ammonium halide such as tetraethylammonium fluoride, tetraethylammonium chloride, tetraethylammonium bromide and tetraethylammonium iodide. Sodium halide is preferable and sodium iodide is more preferable. The used amount thereof is usually 0.001 to 1 mole and preferable 0.05 to 0.2 mole per 1 mole of the used monomer.

The polymerization reaction is usually carried out in the presence of a solvent. The solvent may be one in which the used monomer and the produced polyarylene can be dissolved. Specific examples of the solvent include an aromatic hydrocarbon solvent such as toluene and xylene; an ether solvent such as tetrahydrofuran and 1,4-dioxane; an aprotic polar solvent such as dimethylsulfoxide, N-methyl-pyrrolidone, N,N-dimethylformamide, N,N-dimethylacetamide and hexamethylphosphoric triamide; and a halogenated hydrocarbon solvent such as dichloromethane and dichloroethane. These solvents may be used alone, and two or more thereof may be mixed to use. Among them, the ether solvent and the aprotic polar solvent are preferable and tetrahydrofuran, dimethylsulfoxide, N-methyl-2-pyrrolidone and N,N-dimethylacetamide are more preferable. When the used amount of the solvent is too much, a polyarylene having small molecular weight tends to be obtained, and when the used amount thereof is too small, the property of the reaction mixture tends to be bad, and therefore, the used amount thereof is usually 1 to 200 parts by weight and preferably 5 to 100 parts by weight per 1 parts by weight of the used monomer.

The polymerization reaction is usually conducted in an atmosphere of an inert gas such as nitrogen gas.

The polymerization temperature is usually 0 to 250°C and preferably 30 to 100°C. The polymerization time is usually 0.5 to 48 hours.

After the completion of polymerization reaction, a polyarylene can be isolated by mixing a solvent in which the produced polyarylene is not soluble or is poorly soluble with the reaction mixture to precipitate the polyarylene and separating the precipitated polyarylene from the reaction mixture by filtration. A solvent in which the produced polyarylene is not soluble or is poorly soluble may be mixed with the reaction mixture, and then an aqueous acid solution such as hydrochloric acid may be added thereto followed by separating the precipitated polyarylene by filtration. The molecular weight and the structure of the obtained polyarylene can be analyzed by a conventional means such as gel permeation chromatography and NMR. Examples of the solvent in which the produced polyarylene is not soluble or is poorly soluble include water, methanol, ethanol and acetonitrile, and water and methanol are preferable.

The obtained polyarylene is hydrolyzed in the presence of an acid or an alkali to yield a polyarylene wherein a group represented by -SO₂A is converted to a sulfonic acid group. Alternatively, the obtained polyarylene is also reacted with an alkali metal halide or a quaternary ammonium halide followed by conducting an acid treatment to yield a polyarylene wherein a group represented by -SO₂A is converted to a sulfonic acid group.

### Examples

The present invention will be further illustrated by Examples in more detail below, but the present invention is not limited to these Examples. The obtained polyarylenes were analyzed with gel permeation chromatography (hereinafter, simply referred to as GPC) (the analytical conditions were as followed), and the weight-average molecular weight (Mw) and number-average molecular weight (Mn) were calculated based on the results thereof.

### <Analytical conditions>

GPC measuring apparatus: CTO-10A (manufactured by Shimadzu Corporation)
Column: TSK-GEL (manufactured by Tosoh Coporation)
Column temperature: 40°C
Eluent: N,N-dimethylacetamide containing lithium bromide (concentration of lithium bromide: 10 mmol/dm³)
Flow rate: 0.5 mL/minute
Detection wavelength: 300 nm

### Example 1

To a glass reaction container equipped with a cooling apparatus, 17 mg of nickel bromide, 80 mg of triphenylphosphine, 100 mg of zinc powder, 400 mg of di(2,2-dimethylpropyl) 4,4'-dichlorobiphenyl-2,2'-disulfonate and 3 mL of N-methyl-2-pyrrolidone were added in an atmosphere of nitrogen at room temperature. After that, the polymerization reaction was conducted at 70°C for 4 hours to obtain a reaction mixture containing a polyarylene consisting of a repeating unit represented by the following formula (A):

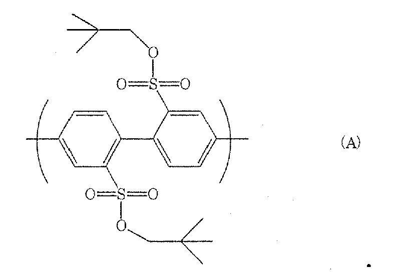

Mw of the polyarylene was 38,000, and Mn thereof was 18,000.

### Example 2

The polymerization reaction was conducted according to the same manner as that of Example 1, except that 20 mg of nickel chloride and 161 mg of triphenylphosphine were used in place of 17 mg of nickel bromide and 80 mg of triphenylphosphine, respectively, and a reaction mixture containing the polyarylene consisting of the above-mentioned repeating unit represented by the formula (A) was obtained.

Mw of the polyarylene was 32,000, and Mn thereof was 16,000.

### Example 3

To a glass reaction container equipped with a cooling apparatus, 14 mg of [1,1'-bis(diphenylphosphino)ferrocene]nickel dibromide, 46 mg of zinc powder, 183 mg of di(2,2-dimethylpropyl) 4,4'-dichlorobiphenyl-2,2'-disulfonate and 1 mL of N,N-dimethylacetamide were added in an atmosphere of nitrogen at room temperature. After that, the polymerization reaction was conducted at 70°C for 4 hours to obtain a reaction mixture containing a polyarylene consisting of the above-mentioned repeating unit represented by the formula (A). Mw of the polyarylene was 199,000, and Mn thereof was 57,000.

### Example 4

The polymerization reaction was conducted according to the same manner as that of Example 3, except that 12 mg of [1,1'-bis(diphenylphosphino)ferrocene]nickel dichloride was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 66,000, and Mn thereof was 24,000.

### Example 5

The polymerization reaction was conducted according to the same manner as that of Example 3, except that 4 mg of nickel bromide and 10 mg of 1,1'-bis(diphenylphosphino)ferrocene were used in place of 14 mg of [1,1'-bis(diphenylphosphino)ferrocene]nickel dibromide, and a reaction mixture containing the polyarylene consisting of the above-mentioned repeating unit represented by the formula (A).

Mw of the polyarylene was 170, 000, and Mn thereof was 50,000.

### Example 6

The polymerization reaction was conducted according to the same manner as that of Example 3, except that 4 mg of nickel bromide and 9 mg of bis(2-diphenylphosphinophenyl) ether were used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 120,000, and Mn thereof was 35,000.

### Example 7

The polymerization reaction was conducted according to the same manner as that of Example 3, except that 22 mg of [1,2-bis(diphenylphosphino)ethane]nickel dibromide was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 12,000, and Mn thereof was 6,000.

### Example 8

The polymerization reaction was conducted according to the same manner as that of Example 3, except that 22 mg of [1,3-bis(diphenylphosphino)propane]nickel dibromide was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 96,000, and Mn thereof was 24,000.

### Example 9

The polymerization reaction was conducted according to the same manner as that of Example 3, except that 23 mg of [1,4-bis(diphenylphosphino)butane]nickel dibromide was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 74,000, and Mn thereof was 25,000.

### Example 10

The polymerization reaction was conducted according to the same manner as that of Example 3, except that 28 mg of [9,9-dimethyl-4,5-bis(diphenylphosphino)xanthene]nickel dibromide was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 33,000, and Mn thereof was 11,000.

### Example 11

The polymerization reaction was conducted according to the same manner as that of Example 3, except that 27 mg of bis(tricyclohexylphosphine)nickel dibromide was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 59,000, and Mn thereof was 21,000.

### Example 12

The polymerization reaction was conducted according to the same manner as that of Example 3, except that 26 mg of bis(triphenylphosphine)nickel dibromide was used in place of 14 mg of [1,1'-bis(diphenylphosphino)ferrocene]nickel dibromide, and a reaction mixture containing the polyarylene consisting of the above-mentioned repeating unit represented by the formula (A) was obtained.

Mw of the polyarylene was 85,000, and Mn thereof was 33,000.

### Example 13

To a glass reaction container equipped with a cooling apparatus, 8 mg of nickel bromide, 24 mg of 1,1'-bis[di(4-methoxyphenyl)phosphino)ferrocene, 92 mg of zinc powder, 366 mg of di(2,2-dimethylpropyl) 4,4'-dichlorobiphenyl-2,2'-disulfonate and 2 mL of N,N-dimethylacetamide were added in an atmosphere of nitrogen at room temperature. After that, the polymerization reaction was conducted at 70°C for 4 hours to obtain a reaction mixture containing a polyarylene consisting of the above-mentioned repeating unit represented by the formula (A) . Mw of the polyarylene was 49,000, and Mn thereof was 18,000.

### Example 14

The polymerization reaction was conducted according to the same manner as that of Example 13, except that 29 mg of 1,1'-bis[di(4-trifluoromethylphenyl)phosphino)ferrocene was used in place of 24 mg of 1,1'-bis[di(4-methoxyphenyl)phosphino)ferrocene, and a reaction mixture containing the polyarylene consisting of the above-mentioned repeating unit represented by the formula (A) was obtained.

Mw of the polyarylene was 46,000, and Mn thereof was 18,000.

### Example 15

To a glass reaction container equipped with a cooling apparatus, 13 mg of [bis(2-diphenylphosphinophenyl) ether] nickel dibromide and 46 mg of zinc powder were added in an atmosphere of nitrogen at room temperature. To the obtained mixture, a solution obtained by dissolving 200 mg of di(2,2-dimethylpropyl) 4,4'-dichlorobiphenyl-2,2'-disulfonate in 1 mL of N,N-dimethylacetamide was added, and a solution obtained by dissolving 103 mg of SUMIKA EXCEL PES 5200P represented by the following formula: 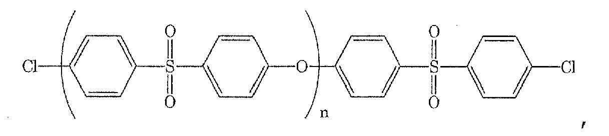 which was manufactured by Sumitomo Chemical Company, Limited; Mw 94, 000 and Mn 40,000 which were measured by the above analytical conditions, in 1.5 mL of N,N-dimethylacetamide was further added to the resultant mixture. After that, the polymerization reaction was conducted at 70°C for 4 hours to obtain a reaction mixture containing a polyarylene comprising a repeating unit represented by the following formula (A): 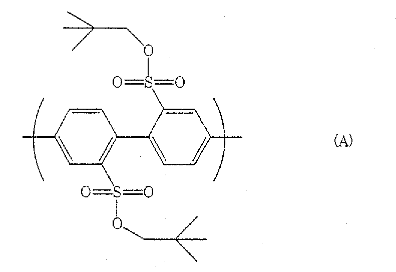 and a segment represented by the following:

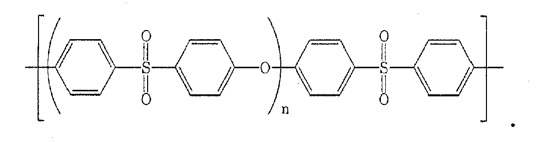

Mw of the polyarylene was 156,000, and Mn thereof was 49,000.

### Example 16

To a glass reaction container equipped with a cooling apparatus, 27 mg of [1,1'-bis(diphenylphosphino)ferrocene]nickel dibromide and 92 mg of zinc powder were added in an atmosphere of nitrogen at room temperature. To the obtained mixture, a solution obtained by dissolving 293 mg of di(2,2-dimethylpropyl) 4,4'-dichlorobiphenyl-2,2'-disulfonate and 48 mg of 2,5-dichloro-4'-phenoxybenzophenone in 2 mL of N,N-dimethylacetamide was added. After that, the polymerization reaction was conducted at 70°C for 4 hours to obtain a reaction mixture containing a polyarylene comprising a repeating unit represented by the following formula (A): 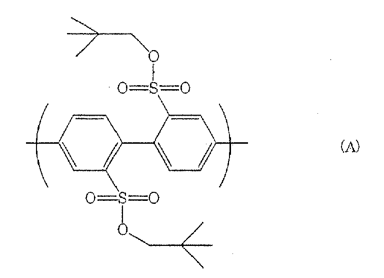 and a repeating unit represented by the following:

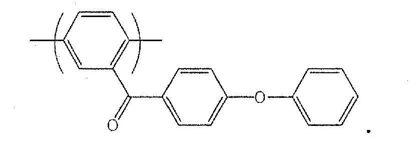

Mw of the polyarylene was 102,000, and Mn thereof was 26,000.

### Example 17

To a glass reaction container equipped with a cooling apparatus, 27 mg of [1,1'-bis(diphenylphosphino)ferrocene]nickel dibromide and 73 mg of zinc powder were added in an atmosphere of nitrogen at room temperature. To the obtained mixture, a solution obtained by dissolving 330 mg of di(2,2-dimethylpropyl) 4,4'-dichlorobiphenyl-2,2'-disulfonate and 10 mg of 1,4-dichlorobenzene in 3 mL of N,N-dimethylacetamide was added. After that, the polymerization reaction was conducted at 70°C for 4 hours to obtain a reaction mixture containing a polyarylene comprising a repeating unit represented by the following formula (A): 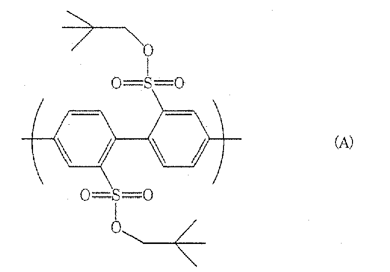 and a repeating unit represented by the following:

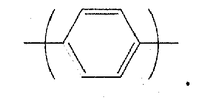

Mw of the polyarylene was 62,000, and Mn thereof was 18,000.

### Example 18

To a glass reaction container equipped with a cooling apparatus, 20 mg of [bis(2-diphenylphosphinophenyl) ether]nickel dibromide and 46 mg of zinc powder were added in an atmosphere of nitrogen at room temperature. To the obtained mixture, a solution obtained by dissolving 183 mg of di(2,2-dimethylpropyl) 4,4'-dichlorobiphenyl-2,2'-disulfonate and 26 mg of polyphenyl sulfone represented by the following formula: 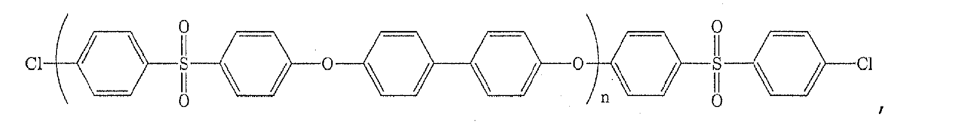 which was manufactured by Aldrich; Mw 60, 000 and Mn 32, 000 which were measured by the above analytical conditions, in 1.5 mL of N,N-dimethylacetamide was added. After that, the polymerization reaction was conducted at 70°C for 4 hours to obtain a reaction mixture containing a polyarylene comprising a repeating unit represented by the following formula (A): 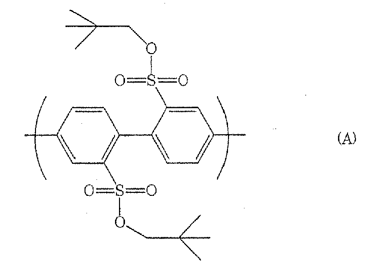 and a repeating unit represented by the following:

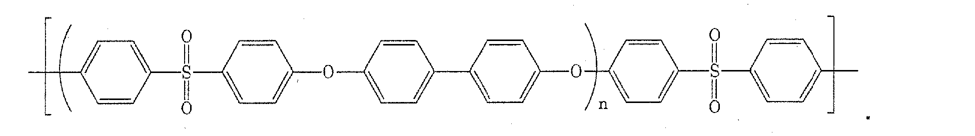

Mw of the polyarylene was 91,000, and Mn thereof was 37,000.

### Example 19

To a glass reaction container equipped with a cooling apparatus, 20 mg of [1,1'-bis(diphenylphosphino)ferrocene]nickel dibromide and 46 mg of zinc powder were added in an atmosphere of nitrogen at room temperature. To the obtained mixture, a solution obtained by dissolving 183 mg of di(2,2-dimethylpropyl) 4,4'-dichlorobiphenyl-2,2'-disulfonate and 20 mg of a compound represented by the following formula: 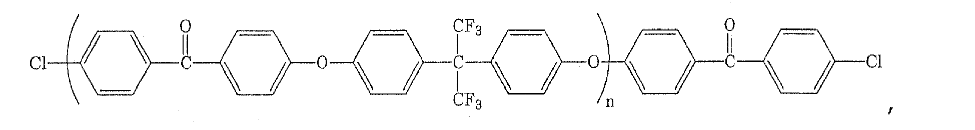 of which Mw was 5, 900 and Mn was 3, 900 measured by the above analytical conditions, in 1.5 mL of N,N-dimethylacetamide was added. After that, the polymerization reaction was conducted at 70°C for 4 hours to obtain a reaction mixture containing a polyarylene comprising a repeating unit represented by the following formula (A): 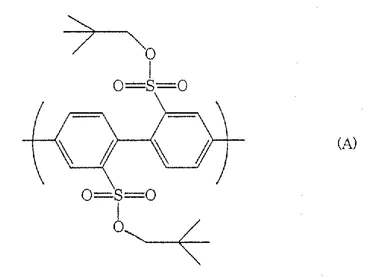 and a repeating unit represented by the following:

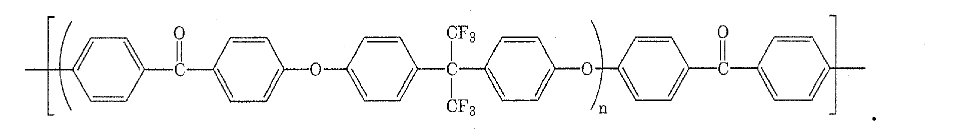

Mw of the polyarylene was 48,000, and Mn thereof was 15,000.

### Industrial Applicability

According to the present invention, a polyarylene can be produced more advantageously.

## Claims

1. A method for producing a polyarylene comprising polymerizing only a dihalobiphenyl compound represented by the formula (1): 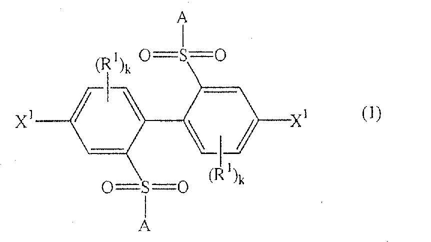 wherein A represents an amino group substituted with one or two C1-C20 hydrocarbon groups or a C1-C20 alkoxy group, and the above-mentioned hydrocarbon group and the alkoxy group may be substituted with at least one group selected from the group consisting of a fluorine atom, a C1-C20 alkoxy group, a C6-C20 aryl group, a C6-C20 aryloxy group, a C2-C20 acyl group and a cyano group,
R¹ represents a fluorine atom, a C1-C20 alkyl group, a C1-C20 alkoxy group, a C6-C20 aryl group, a C6-C20 aryloxy group, a C2-C20 acyl group or a cyano group, and the C1-C20 alkyl group, the C1-C20 alkoxy group, the C6-C20 aryl group, the C6-C20 aryloxy group and the C2-C20 acyl group may be substituted with at least one substituent selected from the group consisting of a fluorine atom, a cyano group, a C1-C20 alkoxy group, a C6-C20 aryl group and a C6-C20 aryloxy group, and when multiple R¹s exist, R¹s may be the same groups or different groups, and the neighboring two -R¹s may be bonded to form a ring,
X¹ represents a chlorine atom, a bromine atom or an iodine atom, and k represents an integer of 0 to 3, or a dihalobiphenyl compound represented by the formula (1) with an aromatic compound represented by the formula (2): 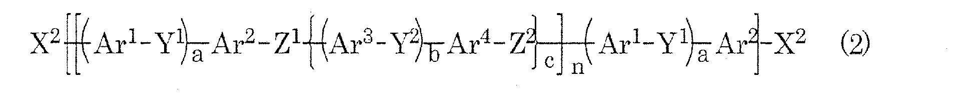 wherein a, b and c are the same or different, and each represents 0 or 1, and n represents an integer of 5 or more, Ar¹, Ar², Ar³ and Ar⁴ are the same or different, and each represents a divalent aromatic group, and the divalent aromatic group may be substituted with at least one substituent selected from the group consisting of
a C1-C20 alkyl group which may be substituted with at least one substituent selected from the group consisting of a fluorine atom, a cyano group, a C1-C20 alkoxy group, a C6-C20 aryl group and a C6-C20 aryloxy group;
a C1-C20 alkoxy group which may be substituted with at least one substituent selected from the group consisting of a fluorine atom, a cyano group, a C1-C20 alkoxy group, a C6-C20 aryl group and a C6-C20 aryloxy group;
a C6-C20 aryl group which may be substituted with at least one substituent selected from the group consisting of a fluorine atom, a cyano group, a C1-C20 alkoxy group and a C6-C10 aryloxy group;
a C6-C20 aryloxy group which may be substituted with at least one substituent selected from the group consisting of a fluorine atom, a cyano group, a C1-C20 alkoxy group and a C6- C20 aryloxy group; and
a C2-C20 acyl group which may be substituted with at least one substituent selected from the group consisting of a fluorine atom, a cyano group, a C1-C20 alkoxy group, a C6-C20 aryl group and a C6-C20 aryloxy group,
Y¹ and Y² are the same or different, and each represents a single bond, -CO-, -SO₂-, -C(CH₃)₂-, -C(CF₃)₂- or a fluorene-9,9-diyl group,
Z¹ and Z² are the same or different, and each represents -O- or -S-, and X² represents a chlorine atom, a bromine atom or an iodine atom, or an aromatic compound represented by the formula (3):
X³-Ar⁵-X³ (3)
wherein Ar⁵ represents a divalent aromatic group, and the divalent aromatic group may be substituted with at least one substituent selected from the group consisting of
a C1-C20 alkyl group which may be substituted with at least one substituent selected from the group consisting of a fluorine atom, a cyano group, a C1-C20 alkoxy group, a C6-C20 aryl group and a C6-C20 aryloxy group;
a C1-C20 alkoxy group which may be substituted with at least one substituent selected from the group consisting of a fluorine atom, a cyano group, a C1-C20 alkoxy group, a C6-C20 aryl group and a C6-C20 aryloxy group;
a C6-C20 aryl group which may be substituted with at least one substituent selected from the group consisting of a fluorine atom, a cyano group, a C1-C20 alkoxy group and a C6-C20 aryloxy group;
a C6-C20 aryloxy group which may be substituted with at least one substituent selected from the group consisting of a fluorine atom, a cyano group, a C1-C20 alkoxy group and a C6- C20 aryloxy group; and
a C2-C20 acyl group which may be substituted with at least one substituent selected from the group consisting of a fluorine atom, a cyano group, a C1-C20 alkoxy group,
a C6-C20 aryl group and a C6- C20 aryloxy group, and X³ represents a chlorine atom, a bromine atom or an iodine atom, in the presence of catalytic amounts of a divalent nickel compound, a trivalent phosphorus ligand and zinc.

2. The method according to claim 1, wherein the trivalent phosphorus ligand is a bidentate phosphorus ligand represented by the formula (4): 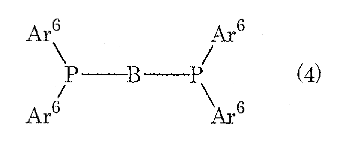 wherein B represents a methylene group, an ethylene group, a trimethylene group, a tetramethylene group, a ferrocene-1,1'-diyl group, a 1,1'-oxybis(2,2'-phenylene) group, a xanthene-4,5-diyl group, a phenoxazine-4,6-diyl group, a 1,1'-binaphthyl-2,2'-diyl group, a 1,1'-biphenyl-2,2'-diyl group or a [2.2]-paracyclophane-4,12-diyl group, and Ar⁶ represents a C6-C20 aryl group which may be substituted with at least one group selected from the group consisting of a fluorine atom, a trifluoromethyl group and a C1-C20 alkoxy group.

3. The method according to claim 2, wherein Ar⁶ is a phenyl group, a 4-methoxyphenyl group or a 4-trifluoromethylphenyl group in the formula (4).

4. The method according to claim 2, wherein B is a ferrocene-1,1'-diyl group or a 1,1'-cxybis(2,2'-phenylene) group in the formula (4).

5. The method according to claim 1, wherein the trivalent phosphorus ligand is a triarylphosphine.

6. The method according to claim 1, wherein the trivalent phosphorus ligand is a trialkylphosphine.

7. The method according to any one of claims 1 to 6, wherein the divalent nickel compound is a nickel halide.
